# EUROPEAN PATENT APPLICATION

(11) **EP 1 548 581 A2**
(43) Date of publication of application: **29.06.2005**
(21) Application number: 04257960.7
(22) Date of filing: 20.12.2004
(51) Int. Cl.: G06F 9/44

(54) **Methods, apparatus and programs for system development**

(30) Priority: 19.12.2003 US 530674
(71) Applicant: Klockwork Corp., Ottawa, Ontario K2G 6P9 (CA)
(72) Inventor: Nikolai Mansurov, Ottawa, Ontario KG2 OB8 (CA)
(74) Representative: Jackson, Robert Patrick

(57) **Abstract**

A method and apparatus for generating a model of a system, in which the system comprises a plurality of physical entities capable of performing interactions between each other. The method comprises receiving an interaction-based specification of the system defining interactions between the plurality of physical entities; dividing the interaction-based specification into a plurality of interaction sections; and generating a model defining each interaction section and its possible continuing interaction sections. An event flow diagram is generated from the model from which an executable model of the system can be automatically obtained.

## Description

### Field of the Invention

The present invention relates to methods, apparatus and programs for developing systems, and in particular, but not limited to developing hardware and software for implementing a system.

### Background of the Invention

Programs for controlling and implementing the behaviour of components in a system are typically developed in a number of stages. The early stages involve identifying the requirements for the system, and drawing up an initial description of how they may be implemented. In this process, an interaction-based specification may be may be used to describe interactions between components of the system, where the interactions may comprise various sequences of communications between the components. Some of the interactions may be modelled using Message Sequence Charts (MSCs). Having produced a general description of the system, a state-based diagram of the system is drawn. An executable program may then be generated from the state-based diagram and the program tested to check whether it implements the system as intended. The development process then typically involves a series of repeated cycles of refining the original system description, then refining the state-based diagram and the program based thereon, and the refinement process is time consuming and, costly and labour intensive.

One of the problems encountered in software development is the difficulty in including sufficient detail in the interaction-based specification to properly define all attributes of the system required for its proper operation. Another problem is the difficulty in faithfully reproducing, in the manually created stated-based diagram, the intentions expressed in the interaction-based specification and without introducing errors.

A method of automatically generating a state-based program from interaction-based sequence descriptions of the system is disclosed in US Patent No. 6405,361, to Broy et al.

### Summary of the Invention

Aspects of the present invention mitigate the above-mentioned limitations by providing a method and apparatus for automatically generating an executable program from an interaction-based specification with sequences of interactions, composition via high-level activity diagrams, inline expressions for additional composition control as well as data for describing both the dataflow along scenarios and composition of scenarios.

According to one aspect of the invention, there is provided a method, apparatus and computer program (product) for deriving an event flow model (diagram/description) from an interaction-based specification comprising:
generating a roadmap of primitive interaction sequences from an interaction-based specification by transforming inline expressions into high-level activity diagrams, and
generating an event flow model (diagram/specification) from a roadmap for a selected actor (component of the system) by merging similar events in the roadmap.

According to another aspect of the present invention, there is provided a method, apparatus and program (product) for transforming an event flow model (diagram/specification) with implicit decisions on data into an equivalent event flow model (diagram/specification) with explicit operations on data.

According to another aspect of the invention, there is provided a method, apparatus and program (product) for consolidating data flows for selected actors in a sequence diagram (model).

According to another aspect of the present invention, there is provided a method, apparatus and program (product) for generating a structure diagram from an interaction-based specification.

According to another aspect of the present invention, there is provided a method, apparatus and computer program (product) for generating a state-based diagram from an event-flow model (diagram/specification.

According to another aspect of the present invention, there is provided a method for generating a model of a system, the system comprising a plurality of physical entities capable of performing interactions between each other, the method comprising the steps of: (a) receiving an interaction-based specification of the system defining interactions between said plurality of physical entities; (b) dividing said interaction-based specification into a plurality of interaction sections; and (c) generating a model defining each interaction section and its possible continuing interaction sections.

Advantageously, this method provides a model which facilitates generating an accurate executable model of the system. The model, which may comprise a roadmap model provides a basis for generating an event flow model, according to another aspect of the present invention, from which the executable model can be derived directly.

According to another aspect of the present invention, there is provided a method and apparatus for generating an interaction-based specification comprising a plurality of individual specifications each defining one or more events for one or more actors, and combining the individual specifications into a combined interaction-based specification in which the relationship/flow between each individual diagram is defined.

According to another aspect of the present invention, there is provided a method of generating an event flow model of a system from a roadmap model of a system, wherein the roadmap model of the system comprises a plurality of nodes and at least one edge between each node, wherein an edge corresponds to any of (1) one or more events for a predetermined physical entity of the system and (2) an idle event for at least one physical entity of the system, the method comprising the steps of: (a) selecting a road map node, (b) determining the follow-up node(s) from the selected roadmap node, (c) creating an event flow node corresponding to the determined follow-up node(s), if such event flow node does not exist, (d) and if an event flow node for said set of nodes exists, connecting a backwards edge from said current event flow node to the existing event flow node for said set.

According to another aspect of the present invention, there is provided an apparatus for generating a model of a system, the system comprising a plurality of physical entities capable of performing interactions between each other, the apparatus comprising: (a) receiving means for receiving an interaction-based specification of the system defining interactions between said plurality of physical entities; (b) dividing means for dividing said interaction-based specification into a plurality of interaction sections; and (c) generating means for generating a model defining each interaction section and its possible continuing interaction sections.

According to another aspect of the present invention, there is provided an apparatus for generating an event flow model of a system from a roadmap model of a system, wherein the roadmap model of the system comprises a plurality of nodes and at least one edge between each node, wherein an edge corresponds to any of (1) one or more events for a predetermined physical entity of the system and (2) an idle event for at least one physical entity of the system, the apparatus comprising: (a) means for selecting a road map node, (b) determining means for determining the follow-up node(s) from the selected roadmap node, (c) means for creating an event flow node corresponding to the determined follow-up node(s), if such event flow node does not exist, (d) and means for connecting a backwards edge from said current event flow node to the existing event flow node for said set, if an event flow node for said set of nodes exists.

According to another aspect of the present invention, there is provided

As used herein, model includes a definition of a system irrespective of the mode in which the model is expressed. The model may be expressed in any mode, for example, a mode capable of interpretation by human or machine (e.g. computer) and such expressions include a diagram, a data structure, text or any other selected form.

As used herein, a node includes any suitable means of representation which distinguishes from a representation of an edge. Thus, a node may be represented by any suitable symbol or artifact (including an edge, as long as it can be distinguished therefrom in some other way).

As used herein, an edge includes any suitable means of representation which distinguishes from a representation of an node. Thus, an edge may be represented by any suitable symbol or artifact (including an node, as long as it can be distinguished therefrom in some other way).

Aspects of the present invention provide a method, apparatus and program (product) for automatically generating an *executable program* from an *interaction-based specification a system.* More specifically, aspects of the invention provide a method, apparatus and a computer program (called a synthesizer) that analyzes the interaction-based specification of a system and produces an executable program that simulates or models the specified system.

### Interaction-Based Specification

An interaction-based specification of a system is a way of defining or specifying the behavior of a system, using the following approach. First, the behavior of the system is described through interactions between several distinct actors. An actor is an entity (e.g. a component of a system) capable of interacting with other actors. An *interaction* is a general concept that models multiple forms of communication. An interaction is distinct from an interaction occurrence, in that the same interaction may occur multiple number of times. Interaction involves a certain *interface,* synchronization, and exchange of information. Two actors are involved in an interaction. One actor *provides* an interaction interface, e.g. waits for an interaction to occur, and receives the incoming interaction, when the interaction occurs. Another actor *uses* this interaction interface, e.g. performs an outgoing interaction for the interaction to occur. An interaction-based specification of the system describes valid sequences of interaction occurrences (valid traces).

The specification of a system may involve a collection of actors to represent the environment of the system and/or the system itself, and/or the components of the system.

Second, a *use-case* driven approach to the specification of behavior is assumed. Behavior is described as a collection of use cases, each of which demonstrates a useful *scenario* of applying the system. A use case may consist of a number of *scenario steps.* Each scenario step describes a sequence of interaction occurrences between certain actors (e.g. the environment of the system and the system itself, or the environment of the system and the components of the system, or interactions between the components of the system).

An interaction-based specification describes a system by (1) describing a collection of actors, (2) describing the interaction interface (possible individual interactions), and (3) constraining the valid interaction sequences. Each interaction sequence can be finite or infinite. The set of valid interaction sequences can be infinite.

Each scenario step may be expressed as a sequence diagram.

Scenarios may involve data in order to describe the flows of data through a use case and/or to precisely describe the flow of the use case.

Scenario steps are composed using a high-level activity diagram. Data can also be used to constrain the composition of scenario steps into valid interaction sequences.

The specification language is explained in more detail below.

An executable program can correspond to an interaction-based specification of a system. An executable program implements an interaction-based specification of a system when it 1) implements the same set of individual interactions as described by the interaction-based specification and 2) when executed, is capable of producing traces of interaction occurrences corresponding to the valid sequences of interactions, described by the specification. An executable program approximates the interaction-based specification if it does not produce all valid sequences of interactions and/or produces some traces of interactions that do not correspond to valid sequences of interactions from the specification viewpoint.

An executable program can be structured in a variety of ways. For example, it can have one component per each actor, communicating with each other in ways corresponding to the specification. Such communication can be done for example via message queues, or by calling methods of the components, or via pipes, or by writing and reading information to files, etc. Alternatively the executable program can contain a single component, corresponding to a selected actor. The incoming interactions for this component can be implemented as inputs, and the outgoing interactions implemented as outputs. Alternatively, the executable program can be monolithic. In this case a whole interaction can be modelled as an internal event in the executable program.

An executable program can implement an interaction described in an interaction-based specification in a variety of ways. The way an interaction from the specification is implemented in the executable program may not be the same as the form of communication, modelled by that interaction. For example, the specification may use an interaction "alarm" between two actors: "sensor" and "central unit" to model triggering a hardware sensor of a security alarm system. In the corresponding executable program both actors may be implemented as two processes and the interaction as a signal exchange between these processes.

Execution of an executable program may be fully automatic or user-driven.

An executable program can be a prototype of the system. An executable program can also be a test case for the system.

Interaction-based specifications can have various degrees of formality, which affects their suitability as the input to automatic tools. It is common to an use interaction-based specification in an informal way to illustrate some exemplary interaction sequences. Although this approach is quite insightful and facilitates communication between the system analysts, illustrative interaction-based specifications are not consistent in the interpretation of meaning of such specifications, especially the composition of individual interaction sequences into a more complete system description. An analytical approach provides a well-defined and consistent meaning to interaction-based specifications and therefore enables analysis of such specifications by automatic tools. Embodiments of aspects of the present invention provide a method of generating executable programs from such a specification, which allows using an interaction-based specification as a prototype of the system. Aspects of the present invention enable executable interaction-based specifications.

The benefits of automatically producing an executable program by implementing an interaction-based specification are as follows. Modern approaches to system engineering and software development, for example OMG's (Object Management Group) MDA (Model-Driven Architecture), emphasize models as the long-term maintainable artifact and automated transformation of models into code. An interaction-based specification of a system can be created at the very early stages of development and automated tools can jump start other models. In model-driven development, it is also essential to validate models early in order to reduce the risk of wasting further effort. In particular, it is important to validate the usefulness of the future system, i.e. that the behaviour of the system satisfies the business objectives of the project. Interaction-based specifications, identified above, describe use cases of the system. The capability to automatically produce a prototype of the system directly from the specification allows validation of the model by observing the behaviour of the prototype. Such validation can be performed by the stakeholders to ensure that the specification corresponds to the original intentions, as well as to validate the intentions themselves.

Aspects of the present invention provide a method, apparatus and computer program, or computer program products that enable automated creation of the following artifacts:

Behaviour models for the whole systems and/or parts thereof, including source code in some selected programming language. This enables jump starting further development phases.

Structure model of the system. This enables validation of the specification, as well as enables jump-starting further development phases.

Execution traces, corresponding to the interaction-based specification. This enables validation of the specification.

Test cases for the system. This enables testing phases.

It is to be noted that any aspect of the invention can be independent of any other aspect of the invention, or different aspects of the invention may be combined.

### Brief Description of the Drawings

Examples of Embodiments of the present invention will now be described with reference to the drawings, in which:
Figure 1A shows a schematic diagram of a model generator incorporating a synthesizer according to an embodiment of the present invention;
Figure 1B shows a schematic diagram of a model generator and testing platform;
Figure 1C shows a schematic diagram of an overview of different aspects of the present inventions, and their inter-relationships;
Figure 2 shows a block diagram of a system whose behaviour is to be modelled, for the purposes of illustrating operation of embodiments of the present invention;
Figure 3 is a sequence diagram (Init) which illustrates a scenario involving the system of Figure 2;
Figure 4 is another sequence diagram (Get) illustrating another scenario involving the system of Figure 2;
Figure 5 is another sequence diagram (Request) illustrating another scenario involving the system of Figure 2;
Figure 6 is another sequence diagram (Exceed) illustrating another scenario involving the system of Figure 2;
Figure 7 is another sequence diagram (Inc) illustrating another scenario involving the system of Figure 2;
Figure 8 is a high-level activity diagram which shows how the individual sequence diagrams of Figures 3-7 are combined to specify a complete behaviour of the example system of Figure 2;
Figure 9A shows an example of an event flow diagram which corresponds to the sequence diagram 'Request' shown in Figure 5;
Figure 9B shows a table (Table 1) of event types in event flow diagrams;
Figure 10A shows a table of primitive interaction sections for the sequence diagram Get of Figure 4;
Figure 10B shows a table (Table 3) of primitive interaction sections for a Loop, e.g. the loop in sequence diagram Get of Figure 4;
Figure 10C shows a roadmap for sequence diagram Get of Figure 4 as a high level activity diagram;
Figure 11A shows a representation of a roadmap fragment for the roadmap of Figure 10C;
Figure 11B shows a roadmap for sequence diagram Get (of Figure 4) for the actor: database of the system of Figure 2;
Figure 12 shows a roadmap fragment for sequence diagram Request of Figure 5;
Figure 13 shows a roadmap fragment for sequence diagram Exceed of Figure 6;
Figure 14 shows a roadmap fragment for sequence diagram Inc of Figure 7;
Figure 15 shows a roadmap for the route high-level activity diagram example of Figure 8;

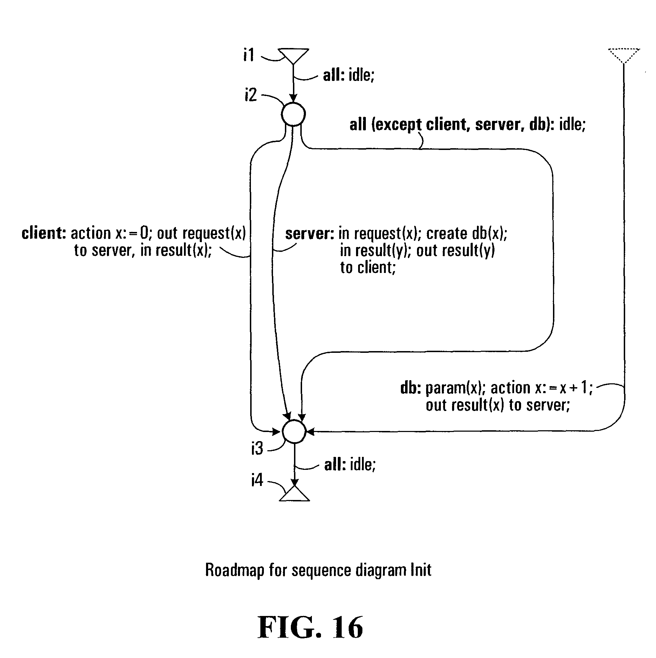

Figure 16 shows a roadmap for sequence diagram Init of Figure 3;
Figure 17 shows an example of the route roadmap of Figure 15 after inserting the roadmap fragment for sequence diagram Init of Figure 16;
Figure 18A illustrates a fragment of a roadmap for illustrating the concepts of enabled events, follow-up nodes and merging;
Figure 18B shows the corresponding fragment of the event flow diagram of Figure 18A;
Figure 19A shows a table (Table 4) of steps for deriving an event flow diagram for the actor: database in the system of Figure 2;
Figure 19B shows an event flow diagram for actor: database;
Figure 20A shows an example of an input event flow diagram with data;
Figure 20B shows a transformation of the input flow diagram of Figure 20A;
Figure 21A shows another example of input event flow diagram with data;
Figure 21B shows an example of an event flow diagram resulting from the transformation of the input event flow diagram of Figure 21A;
Figure 22A shows another example of an input event flow diagram with data;
Figure 22B shows an example of a transformed event flow diagram of Figure 22A;
Figure 23A shows an example of a sequence diagram;
Figure 23B shows an example of an input event flow diagram with data, corresponding to the sequence diagram of Figure 23A;
Figure 23C shows an example of a transformed event flow diagram of Figure 23A;
Figure 24A shows another example of an input event flow diagram;
Figure 24B shows an example of a transformed event flow diagram of Figure 24A;
Figure 25A shows another example of an input event flow diagram;
Figure 25B shows an example of the transformation of Figure 25A into an output event flow diagram;
Figure 26A shows another example of an input event flow diagram;
Figure 26B shows an example of a transformation of the input flow diagram of Figure 26A;
Figure 27 shows a table (Table 5) (of various deployment configurations) for use in a method for consolidating all data flows for selected actors in an interaction-base specification (e.g. sequence diagram(s));
Figure 28 shows an example of a consolidation of actor: client, in sequence diagram Get of Figure 4 of the system of Figure 2;
Figure 29 shows an example of a consolidation of actors: server and database, in the sequence diagram Get of Figure 4;
Figure 30 shows another example of a consolidation of actors: client and database, in sequence diagram Get (Figure 4);
Figure 31 shows an example of a consolidation of all actors in sequence diagram Get (Figure 4);
Figure 32A shows an example of a state-based diagram (fragment) generated from an event flow diagram;
Figure 32B and 32C show tables (Tables 6 and 7) used to generate a state-based diagram;
Figure 32D shows an example of a state-based diagram generated from the event flow diagram for actor: database of Figure 19B;
Figure 33A shows a sequence diagram illustrating 'lost' and 'found' events;
Figure 33B shows a table (Table 8) of sequence diagrams, events and updates to channels for generating a structure diagram;
Figure 33C shows a structure diagram of a system resulting from the table (Table 8) of Figure 33, and
Figure 34 shows a table (Table 9) containing sets of messages between specified actors (components) of a system and their direction, which may generated during the process of forming a structure diagram.

### Detailed Description of Embodiments

Embodiments of the present invention provide a synthesizer, which converts a description of a system into an operational model or prototype of the system and/or a prototype of one or more components of the system. Each model is executable to allow the system designer to verify whether the system and components thereof operate in the intended manner, and assist in identifying any problems in the operational design of the system or components thereof at the earlier stages of development. Embodiments of the invention may be used to design any system, whether system control and response is implemented in hardware or software.

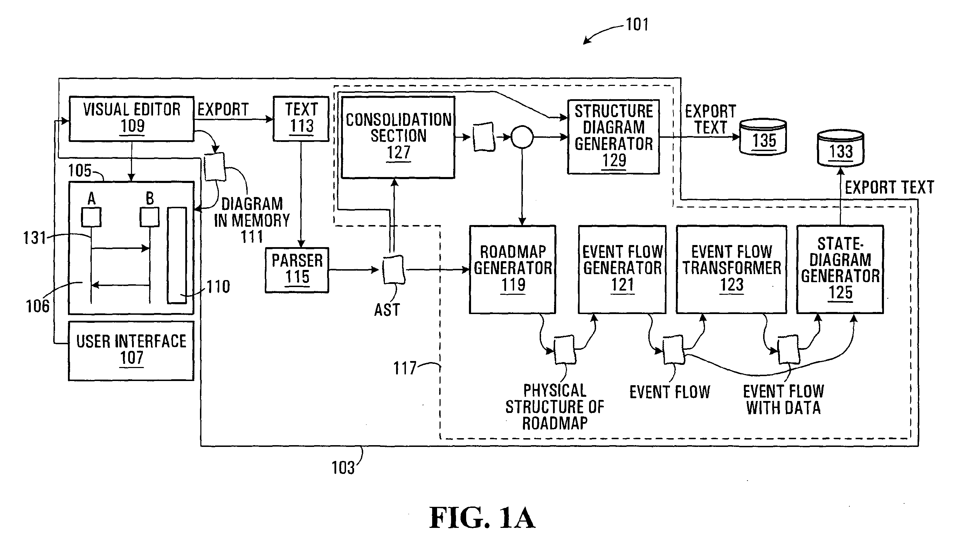

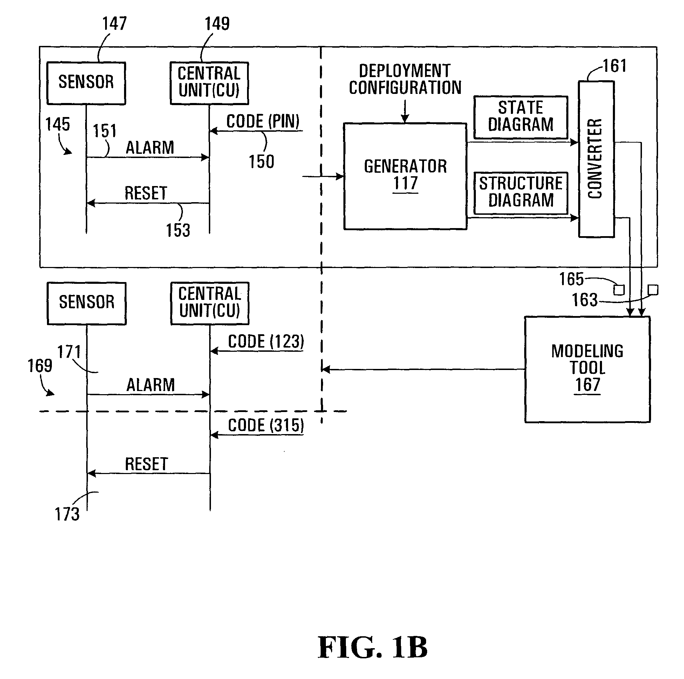

Examples of a synthesizer according to an embodiment of the present invention is shown in Figures 1A and 1B.

Referring to Figure 1A, a model generator, generally shown at 101 comprises a model generating section 103, which may be implemented by a computer, a visual display section 105, for example a computer monitor, and a user interface 107 for receiving user input commands, and which may be implemented by any suitable means such as a keyboard and/or mouse or other interface. The model generating section 103 comprises a visual editor 109, which interfaces with the user interface 107 and the visual display 105. The visual editor 109 receives user commands via the user interface 107 to control the display and allow a visual image to be generated. For example, the visual editor may create a menu bar and symbols 110 on the display for use by the designer in creating an image of the system whose executable model is to be generated. The visual editor 109 may also store a structural diagram 111 of the displayed image in memory. The visual editor 109 also creates and exports a text representation 113 of the diagram. The text representation may comprise any visual modelling language. A parser 115 receives the text representation 113 (e.g. data structure) from the visual editor 109 and compiles the text representation 113 into an executable language (e.g. data structure) such as an abstract syntax tree (AST), as an input to the synthesizer 117.

In this embodiment, the synthesizer 117 comprises a roadmap (model) generating section 119, an event flow (model) generating section 121, an event flow transforming section 123, a state-based diagram (or model) generating section 125, a consolidator section 127 and a structure diagram (or model) generating section 129.

The input to the synthesizer generally comprises an interaction-based specification of a system, derived for example from one or more sequence diagrams 131 describing sequences of interactions between components of the system generated by the system designer. The roadmap generating section 119 generates a roadmap (model) from the interaction-based specification which is subsequently used by the event flow (model) generator 121 and optionally the event flow transformer 123 to generate an event flow (model). The roadmap generating section may generate a roadmap fragment for each sequence diagram of the interaction-based specification and generate a root roadmap from the root high-level activity diagram (which combines individual sequence diagrams), and from the roadmap fragments, as explained in more detail below.

The event flow generating section 121 receives as its input a roadmap generated by the roadmap generator 119, and which may comprise a roadmap for a number of actors (components) of the system, and generates an event flow model, e.g. diagram or specification from the roadmap for a selected actor (component).

The event flow transformer 123 takes as its input an event flow model (e.g. diagram/specification) from the event flow generating section 121 and transforms the event flow diagram/specification into an equivalent event flow diagram which defines explicit operations on data.

The state-based diagram generator 125 receives as its input the event flow model (e.g. diagram/specification) from either one of the event flow sections 121, 123 and generates a state diagram (or model) therefrom. The state-based diagram generator 125 outputs the resulting state-based diagram (model) for further use, for example for storage on a storage medium 133 or for testing and verification.

The consolidation section 127 receives as its input an interaction-based specification, for example, a sequence diagram, and consolidates two or more actors of a system into a single actor. This allows the system to be modelled at a higher level, and reduces the number of components to be modelled into an executable prototype and details of their interactions. The consolidated interaction-based specification generated by the consolidation section 127 may be provided as an input to the roadmap generating section 119 from which the successive sections 121, optionally 123 and 125 generate a state-based diagram (model) .

The structure diagram generating section 129 receives as possible inputs the interaction-based specification from the parser 115 and/or the consolidated interaction-based specification from the consolidation section 127. The structure diagram generator outputs a structure diagram (model) of the system for further processing and/or storage, for example in a storage medium 135.

The operation and function of each section of the synthesizer 117 is described in more detail below. It is to be noted that in embodiments of the synthesizer, an event flow transformer, a state based diagram generator, a structure generator and a consolidation section are optional, and in some embodiments, all of these components may be omitted. In other embodiments, one of the roadmap generator and the event flow generator may also be omitted.

An example of a model generator in which embodiments of the present invention may implemented is shown in Figure 1B, and illustrates how the executable model generated by the synthesizer may be tested.

Referring to Figure 1B, a sequence diagram 145 of a system is generated by a designer. In this example, the system is a security system comprising two actors (components): a sensor 147 and a central unit 149. The diagram includes two possible interactions between the two components, namely an alarm 151 from the sensor to the central unit and a reset 153 from the central unit to the sensor. This system also provides an input 150 for receiving data, in this case a code or pin number to the central unit.

An interaction-based specification of the system is input to the synthesizer 117 of the model generator 103, and which may be similar to the synthesizer described above with reference to Figure 1A. If required, a configuration file defining consolidation(s) for various components in the interaction based specification may be provided and used by the consolidation section. The synthesizer generates a state-based diagram and/or a structure diagram which is then converted by a converter 161 into an executable program 163, 165. The executable program may comprise any desired language, and in this embodiment comprises a language which can be used by a modelling tool 167, and in one example comprises a specification and description language (SDL). The modelling tool 167 executes the program and the results 169 of the execution steps are output on a visual display. The system output by the modelling tool may be displayed in a similar form to the input system 145 and indicate the response of the system to various inputs using traces which are also similar to the possible interactions indicated in the input system 145.

By way of illustration, the input system 145 is designed such that the central unit resets the sensor only if the code or pin number is "315", and the sensor sends an alarm to the central unit for any other input. To test the generated model, the user can input various pin numbers at the input 150 and observe the model responses to the inputs as traces in the output display 169. For example, as a first input, the user inputs pin number "123" and a first trace 171 is generated which indicates that an alarm message is sent from the sensor to the central unit. The user can verify that this is the correct response from the system. In another step, the user inputs pin number "315" and a second trace 173 is generated which indicates a reset from the central unit to the sensor, which the user can again verify as the expected response from the system. Advantageously, the synthesizer can automatically generate an executable model from an input interaction-based specification to allow the model to be tested at the early stages of development. In contrast to known methods, in which the starting point for modelling a system is a state-based diagram, in embodiments of the present invention, the starting point for modelling is an interaction-based specification of the system from which a state-based diagram (and/or structure diagram) can be accurately generated, and an executable program generated from the state and/or structure diagram.

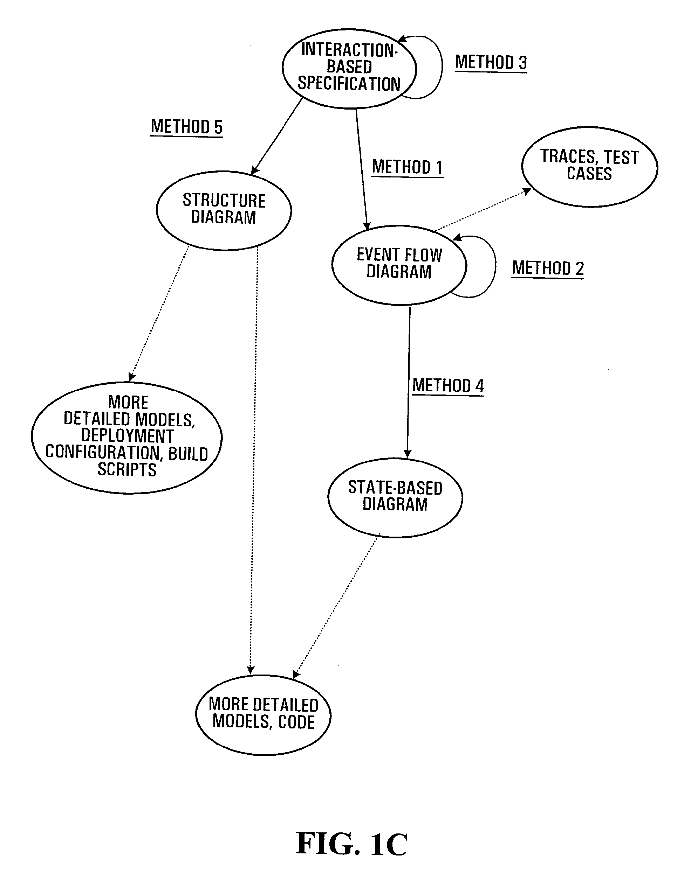

Figure 1C shows an overview of the various aspects of the present invention and their inter-relationships. In a first aspect (method 1), an interaction-based specification is transformed into an event flow model. The event flow model can be analysed, and/or used to generate traces. The event flow model can be transformed into a simplified form to convert implicit decisions on data into explicit decisions on data (method 2) and the event flow model (transformed or not) may be used (method 4) to generate a state-based diagram from which an executable model can be generated. Two or more components of an interaction-based specification may be consolidated into a single component (method 3) and/or a structure diagram may be generated from an interaction-based specification (consolidated or not) (method 4).

Embodiments of the synthesizer and the principals of operation thereof are described in more detail below.

Interaction-based specifications (scenario steps described as sequence diagrams with inline expressions and data, further composed by high-level activity diagrams).

Interaction-based specifications are comprised of a hierarchy of high-level activity diagrams that describe the composition of multiple sequence diagrams with control and data. Control in sequence diagrams is described, for example, as alternatives, loops, etc. by the so-called inline expressions.

A high-level activity diagram coordinates lower-level behaviours by providing sequence and conditions rather than specifying which actors perform those behaviours. The low-level behaviours coordinated by these models can be initiated because other behaviours finish executing, because objects and data become available, or because events occur external to the flow. The flow is modelled as activity nodes connected by activity edges (lines).

Interaction diagrams with control and data specify low-level behaviours as collaboration between selected instances. The instances are represented as lifelines. Collaboration is performed by exchanging messages.

Control within interaction diagrams can be done by using inline expressions, such as alt (alternative), opt (optional), loop, etc.

Sequence diagrams use data to specify flow of data across interactions as well as for specifying composition. Data can be used as message parameters, as well as for decisions and/or local actions.

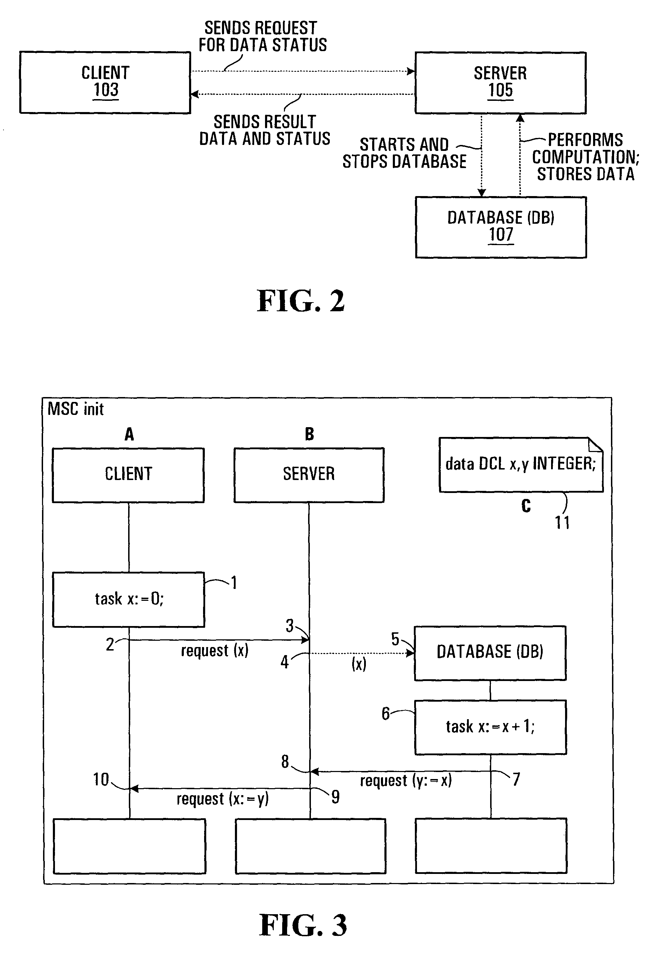

Figures 2-7 show an example specification used to illustrate operation of embodiments of the invention.

Figure 2, shows an overview of the example system. The specification describes a simplified three tier system 101 comprising, three actors or physical entities: the client 103 (e.g. a client communication device, such as a computer), a server 105 and a database 107, db,(illustrated as rectangular blocks). The client actor 103 interacts with the server 105 (illustrated as arrows between the corresponding blocks). The client 103 sends requests for status and data to the server 105. The server replies by sending back the data and status.

The server actor 105 interacts with the db actor 107 in order to fulfill requests from the client 103. The db actor performs the actual computation and stores the data.

Figures 3 to 7 use the ITU-T (International Telecommunications Union Telecommunications Standards Sector) standard notation called Message Sequence Charts (MSC) to precisely describe the behaviour of the example system as a set of sequence diagrams. Other notations are possible. Figures 2 to 6 include additional annotations (letters A, B, and C and numbers 1 to 19, 115,117,117a, and 117b), which are not part of the MSC notation, and are used to refer to the elements of the diagram in the text.

Figure 3 illustrates a scenario involving all three actors: client 103, server 105 and db 107. The actors are represented as vertical lifelines A, B and C respectively. Each lifeline has the header symbol (containing the name of the actor) and the end symbol. The sequence diagram Init describes three main *interactions*: interaction request from client to the server; interaction result from db to the server, and the interaction result from the server to the client, represented as solid horizontal arrows. The diagram also describes the creation of the actor db 107 by the actor server, 103 shown by the dashed horizontal line, and two local actions 1,6 performed by actors client and db 107 which are represented as rectangles, containing the text of the *action statement.* Interactions describe how data is passed between actors.

Sequence diagram Init also contains declarations of variables annotated by number 11.

More precisely, sequence diagram Init describes the ordering of events. Events are annotated by numbers 1-10.

Actor client 103 performs the following events: 1 - local action x:=0; 2 - send message request with parameter x to server; "x" is the name of the variable; there are private instances of this variable in each actor; interaction between actors "client" and "server" achieves synchronization on the value of the private values of this variable between these two actors; using the name of the variable as the parameter of the interaction is the shortcut for using the so-called binding: "x=:x", which means that the sender takes the current value of its private instance of the variable with the name "x" (the left-hand side of the binding symbol "=:") and puts this value into the message "request", while the receiver of the message takes the value of the parameter of the message "request" (without any knowledge of where this value came from at the sender side) and places this value into its private instance of the variable with the name "x" (the right-hand side of the binding symbol "=:"); 10 - receive message result from the server, during which the value of the variable y in the server is assigned to the variable x in the client; in this case the full form of the binding is used as the message parameter ("x:=y"); this also illustrates the fact that the binding symbol can be reversed (i.e. ":=" instead of "=:"), the placement of the ":" in the binding symbol determines the direction of the value assignment; the direction of the assignment coincides with the direction of the message; at the ":" side of the binding symbol one places the variable name of the receiving actor (to which the value from the message is assigned as the side-effect of the interaction); on the "=" side of the binding symbol one can place an entire expression (which is evaluated at the sender side, including any values of the variables).

Actor server 105 performs the following events: 3 - receive message result from the client; variable "x" of the "server" is updated as the result of this interaction; 4 - create actor db, during which the value of the variable x of the "server" is passed to db; 8 - receive message result from db; as the side-effect of this interaction the variable "y" of the "server" is updated; 9 - send message result to client; the "server" puts the current value of its variable "y" into the message;

Actor db (107) performs the following events: 5 - initialization; as the side-effect the private variable "x" of the actor "db" is initialized; 6 - local action x:=x+1; 7 - send message result to server; actor "db" puts the value of its private variable "x" as the parameter of the message.

In sequence diagrams events are ordered per each lifeline (from top to bottom) as well as in each interaction (send event before the receive event, as well as create event before the initialization event). Therefore in sequence diagram Init all events 1 through 10 are fully ordered.

In scenario Init the client sends request to the server. The server creates db to service the request, receives result and passes it back to the client.

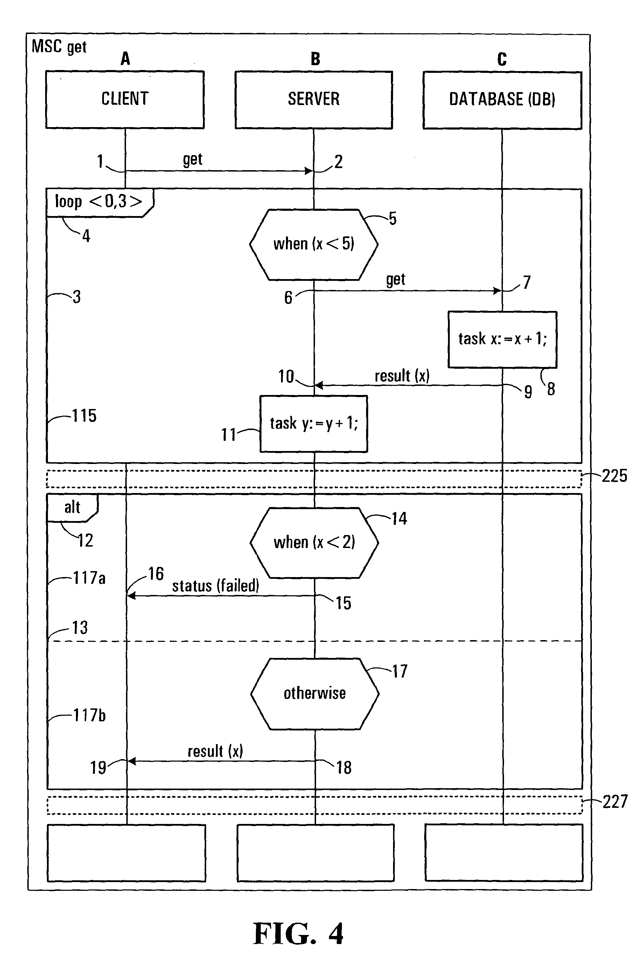

Figure 4 shows sequence diagram "get", which describes another scenario of the example three tier system 101. In scenario Get the client 103 retrieves information from the server 105 by sending message get. The server further interacts with the db 107 to service this request. The server replies with either result or status.

This diagram illustrates the so-called inline expressions, which in this example include: loop inline expression, annotated by number 3 and alt inline expression, annotated by number 12. Each inline expression is represented by a rectangular frame 115, 117, which specifies the so-called *scope* of the inline expression i.e. a *section*, of the diagram, containing some events. For example, the scope of the loop inline expression 3 consists of events 5,6,7,8,9,10 and 11. The scope of the alt inline expression 13 consists of events 14-19.

The loop inline expression contains the so-called *loop boundary* or frame annotated by number 4. Construct <0,3> means that the scope of the loop can be repeated at least 0 times and at most 3 times.

Instance Client 103 does not participate in the loop inline expression 3.

The alt inline expression contains two branches 117a, 117b indicated as alternative sections of the diagram by branch separator 13. The first branch contains events 14,15 and 16. The second branch contains events 17,18 and 19. Only one of the alternative branches can be present in each valid trace.

This diagram also illustrates the use of guard conditions 5,14 and 17. Guard conditions further constrain valid traces: Boolean expressions in guard conditions in a valid trace should evaluate to true. Guard condition "otherwise" 17 means that the corresponding branch should be selected when the guard conditions in all other branches evaluate to false.

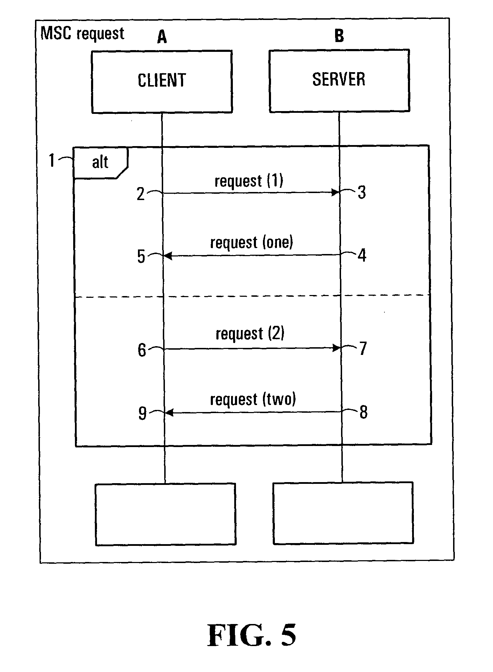

Figure 5 shows sequence diagram "Request" which specifies two scenarios in which client requests status from the server. This diagram illustrates an alt inline expression (1) in which neither branch has a guard condition. The first branch contains events 2, 3, 4 and 5, and the second branch contains events 6, 7, 8 and 9.

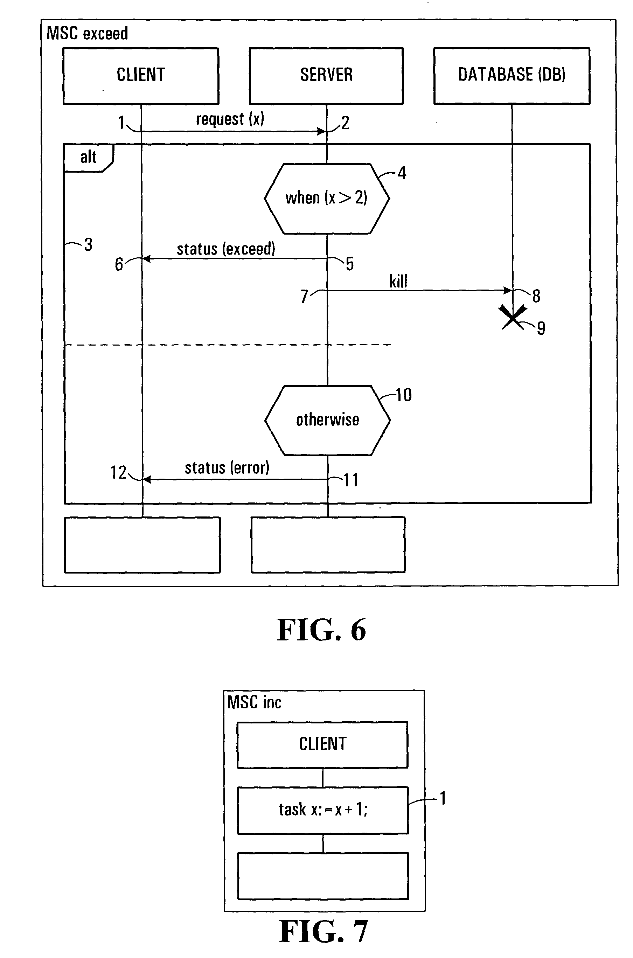

Figure 6 shows sequence diagram "Exceed" which specifies handling of requests from the client by the server. This diagram illustrates stopping of actors (9).

Figure 7 shows sequence diagram "Inc", which specifies a local action performed by client. This diagram involves only one lifeline.

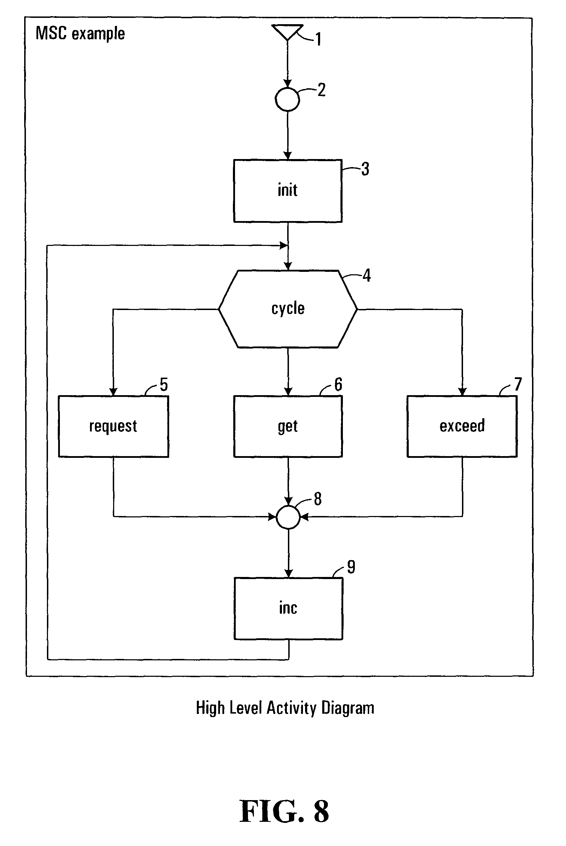

Figure 8 shows an example of a high-level (activity diagram, which uses ITU-T standard notation High-Level Message Sequence Charts (HMSC), to specify how individual sequence diagrams are combined to specify complete behavior of the example system.

In this high-level activity diagram, each rectangular block is a so-called reference to one of the sequence diagrams of Figures 3 to 7 and the flow lines represent possible continuations of each sequence diagram. Symbol 1 represents the start of the activity. Symbols 2 and 8 are the so-called connection symbols that are used to graphically represent connections between flow lines. Symbol 4 is an additional condition.

### Method 1: Deriving Event Flow Model (diagram) from an Interaction-based Specification

Embodiments of a method, apparatus and program for generating an event flow model from an interaction-based specification are described below. Embodiments of the method may be implemented using a synthesiser comprising a roadmap and event flow generator, for example as shown in Figure 1A.

An event flow diagram is a graph comprising nodes and edges (lines). Each edge connects two nodes and represents *a single event* in the specification. It can be said that an edge is "marked" with an event. An example of a method for generating event flow diagrams from interaction-based specifications according to an embodiment of the present invention is described below. Generation of event flow diagrams is performed for a *selected actor* from the total set of actors in the interaction-based specification. Nodes are derived from events in interaction diagrams. Only events relevant to the selected actor are considered in the event flow diagram. Interactions are split into input and output events.

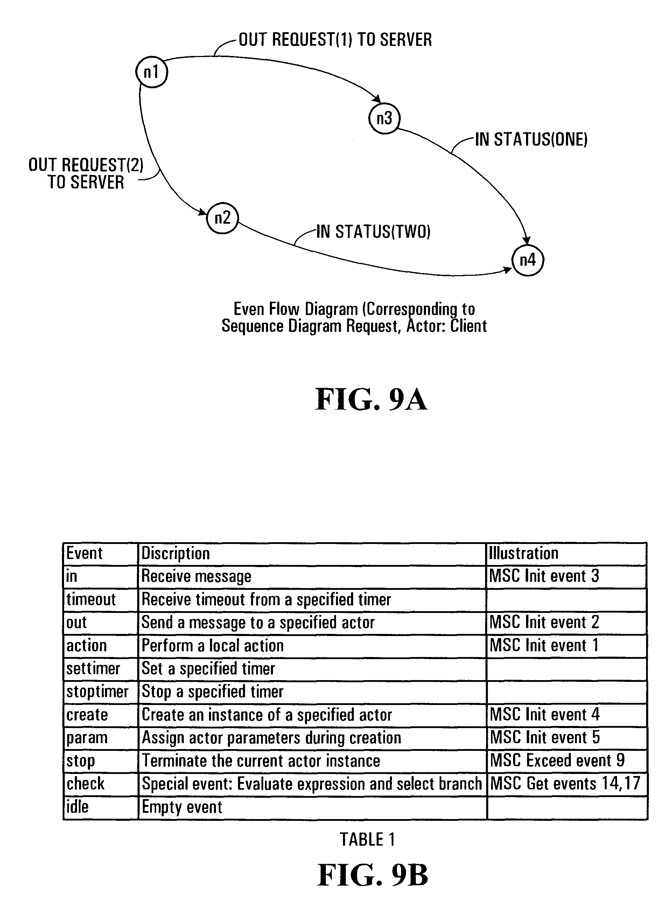

An example of an event flow diagram is shown in Figure 9A, and corresponds to sequence diagram Request of Figure 5, for, actor client

A complete list of event types in event flow diagrams is represented in the Table 1 shown in Figure 9B. The right hand column indicates where examples of the specified events can be found in the sequence diagrams of Figures 3 & 7.

The method enables a proper flow of events to be derived from an interaction-based specification, and comprises two main steps: (1) Generating a roadmap of primitive interaction sequences from an interaction-based specification by transforming inline expressions into high-level activity diagrams, and (2) Generating an event flow diagram from the roadmap for a selected actor by merging similar events. These two steps are described below using the example system of Figure 2, for the purpose of illustration only.

### STEP 1

A roadmap is a high-level activity diagram that combines *primitive interaction sections* from each individual sequence diagram. A primitive interaction section is a maximum section of a sequence diagram such that it does not cross frames of inline expressions (e.g. frames 115, 117a, 117b of Figure 4). Some primitive interaction sections start at the beginning of a sequence diagram, while other sections end at the end of the sequence diagram. A primitive interaction section does not always start with a condition. Sequence diagrams are split into primitive interaction sections using the scopes of (potentially nested) inline expressions.

Determining the set of primitive interaction sections corresponding to a given sequence diagram can be considered as a transformation of the sequence diagram, during which the said sequence diagram is *cut into sections.* Each primitive interaction section can be represented as a sequence diagram.

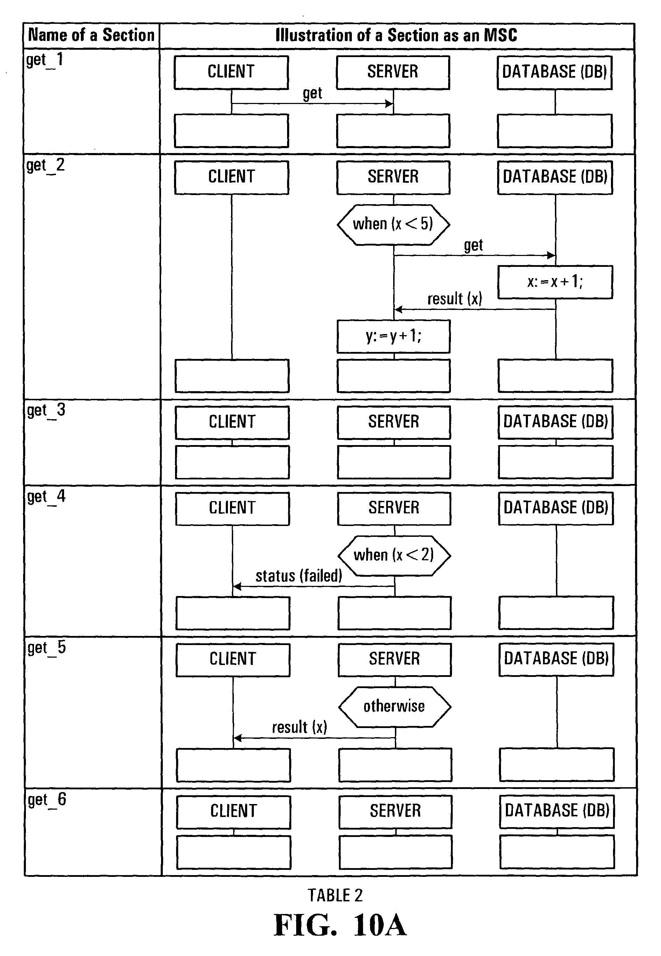

Primitive interaction sections of the sequence diagram Get are illustrated in Table 2 of Figure 10A.

Referring to Table 2, get_1 comprises the primitive interaction section "Get" shown in Figure 4. Get_2 comprises all of the interactions contained within the loop frame 115 of Figure 4. Get_3 comprises the primitive interaction section 225 between the loop and alt frames of Figure 4. Primitive interaction section get_4 comprises the interactions contained in the first alt frame 117a of Figure 4 and primitive interaction section get_5 comprises the interactions contained in the second part of the alt frame 117b. Finally, primitive interaction section get_6 comprises interactions enclosed by frame 227 of Figure 4.

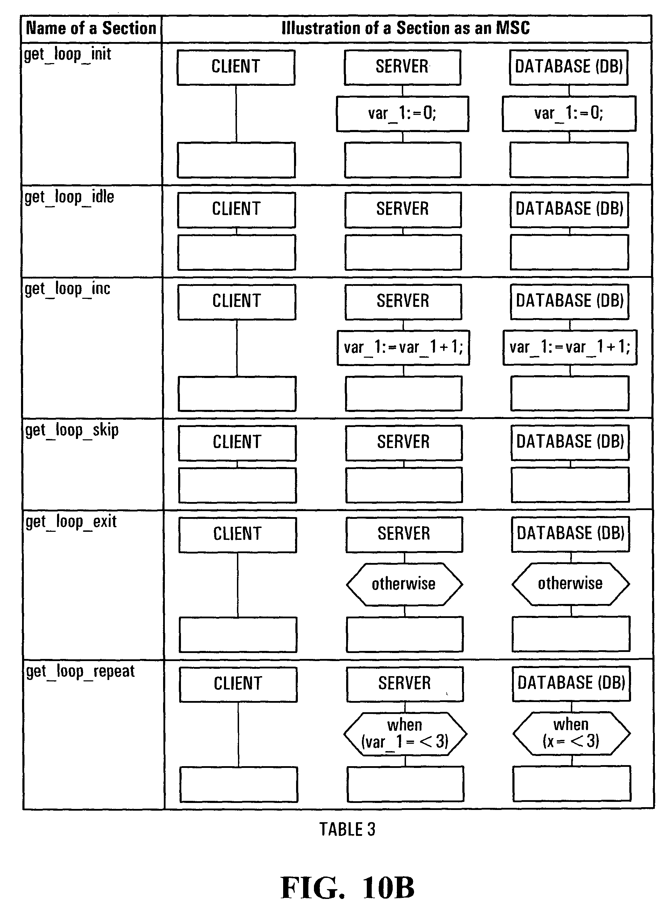

Additional primary interaction sections are required to represent the loop inline expression in sequence diagram Get, and these are shown in Table 3 of Figure 10B. These additional primary interaction sections can be used for any loop. It is to be noted that the only non-general loop interaction section of Table 3 is "get_loop_repeat" which specifies the number of times the loop is repeated, which of course can vary depending on the particular application. Embodiments of the present invention provide a method of representing various inline expressions by means of assemblies of primitive interaction sections (further referred to as *patterns* for inline expressions).

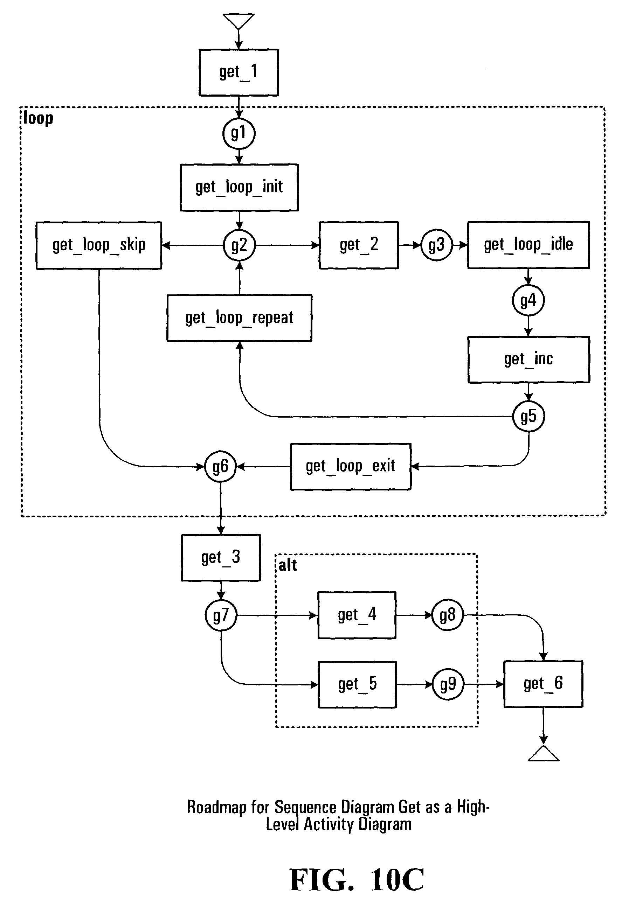

Figure 10C illustrates the roadmap for sequence diagram Get (Figure 4) as a high-level activity diagram.

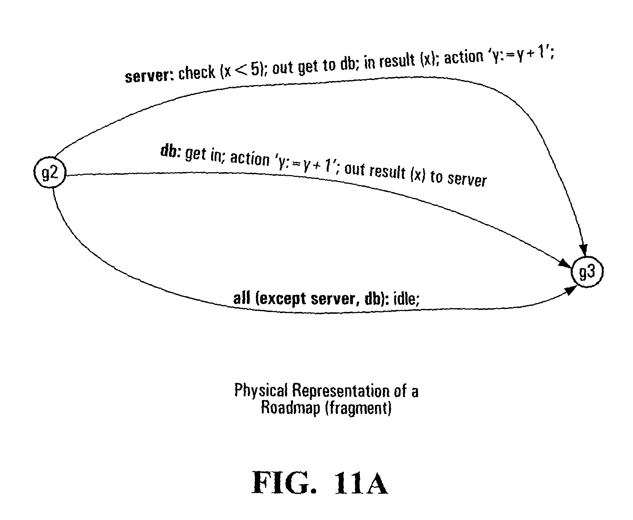

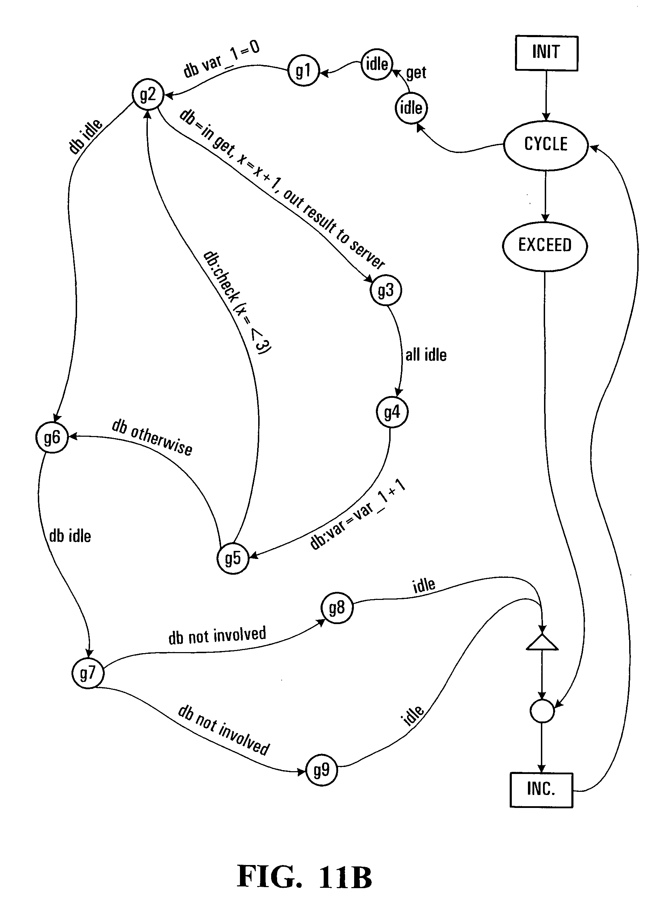

Figure 11A shows a physical representation of a roadmap (fragment) derived from the roadmap of Figure 10C, and Figure 11B shows a complete roadmap for sequence diagram Get for actor database derived from the roadmap of Figure 10C. This diagram also shows how the roadmap for Get is imported into the root roadmap derived from the high level activity diagram of Figure 8.

A primitive interaction section is an important concept of interaction-based specifications (scenario steps described as sequence diagrams with inline expressions and data, further composed by high-level activity diagrams). When the valid traces, corresponding to an interaction-based specification are considered, they comprise sections, corresponding to primitive interaction sections. In other words, primitive interaction sections are the units, from which valid traces are built. When building valid traces, it is important to know all possible continuations for each primitive interaction section.

The purpose of the roadmap is to describe primitive interaction sections and their possible *continuations.*

The roadmap structure can be physically represented as a graph using a format close to the event flow graphs. Primitive interaction sections are represented as separate edges, one per each lifeline that is explicitly present in the corresponding section. In a case when a certain lifeline is not involved in any activities at the corresponding section, the edge is marked with an idle event, for example. Otherwise, the edge is marked with a complete sequence of events from the corresponding section.

Each edge is first marked by the name of the instance (i.e. actor). Additionally, it is practical to introduce another edge marked with an idle event for any other instances (actors) that are not explicitly present at the current section. This simplifies subsequent determination of event sequences for an actor with a given name.

Figure 11A illustrates the physical representation of a roadmap from Figure 10C between nodes g2 and g3 and activity get_2. The sequence diagram for activity get_2 is represented in Table 2. The graph shown in Figure 11A contains two nodes (g2 and g3). Edges marked "server" and "db" correspond to the actors server and db that are involved in some activities at MSC get_2. Actor client is not involved in any activities, but is explicitly present in the MSC Get. The edge marked "all(except server, db)" corresponds to any actors that are not explicitly present at the section get_2. As a matter of optimization, the edge for actor client is omitted, since it is anyway covered by the "catch-all" edge marked as "all". Each edge contains an ordered sequence of events for the corresponding actor from the primitive interaction section.

In some implementations of the method, edges may contain references to the original events in the sequence diagrams.

As indicated above, Figure 11B shows a roadmap for sequence diagram Get which includes all of the nodes of Figure 10C but only edges for the actor database. Each edge is marked with the sequence of events for the corresponding interaction section contained in Tables 2 and 3. In addition, Figure 11B shows the placement of roadmap for sequence diagram Get in the route roadmap to be described below which is described from the high level activity diagram of Figure 8.

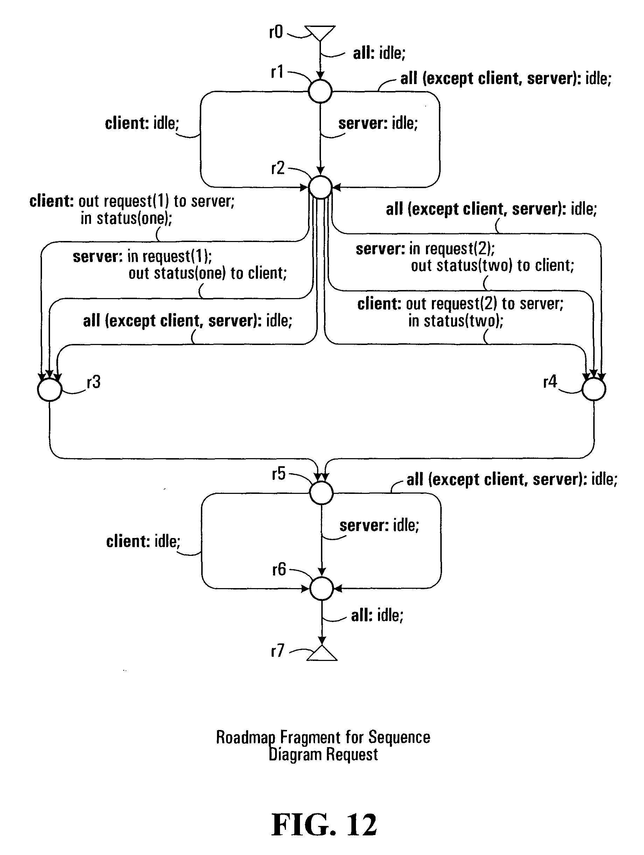

Figure 12 illustrates the roadmap fragment for sequence diagram Request shown in Figure 5.

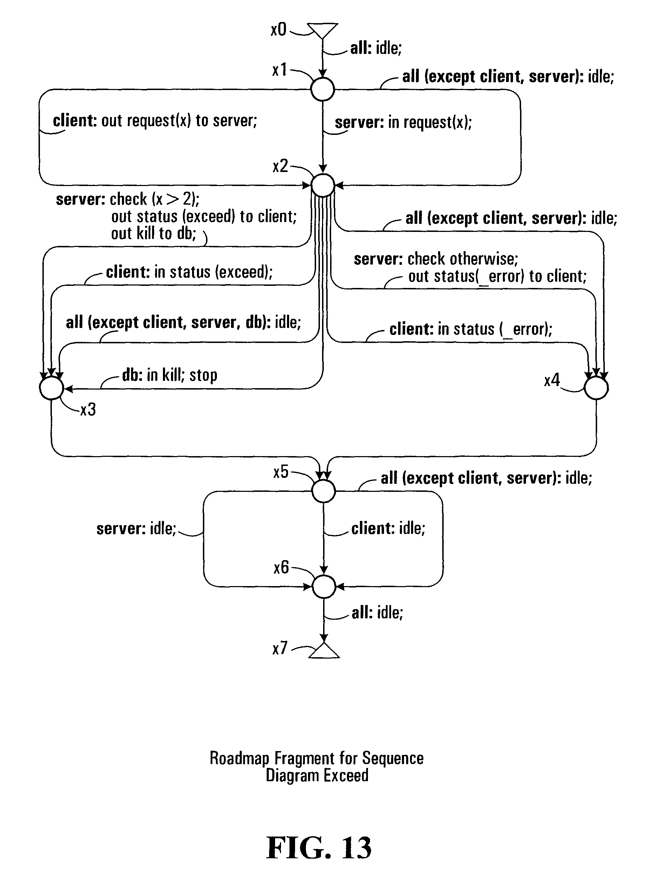

Figure 13 illustrates the roadmap fragment for sequence diagram Exceed, shown in Figure 6.

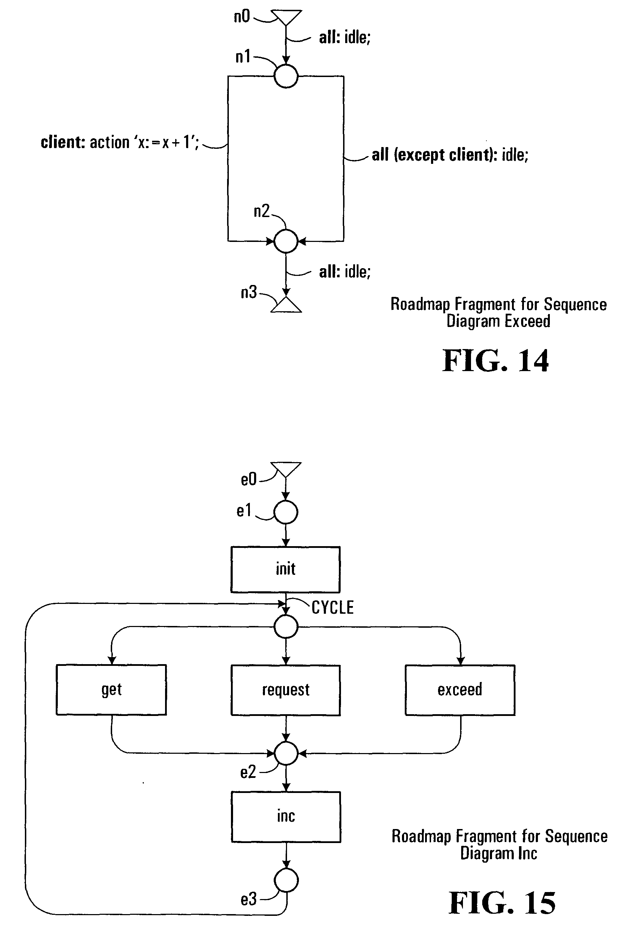

Figure 14 illustrates the roadmap fragment for sequence diagram Inc, shown in Figure 7.

The intermediate steps of illustrating the primitive interaction sections and inline expression patterns are omitted. The roadmaps of Figures 12 to 14 are illustrated in *physical representation,* as introduced in Figure 11A, rather than in the form of Figure 10C.

Embodiments of the present invention provide a method and apparatus to determine a roadmap corresponding to a given interaction-based specification by transforming, possibly recursively, High-Level activity diagrams, sequence diagrams and inline expressions into roadmap fragments to flatten the hierarchy of high-level activity diagrams and sequence diagrams into a single roadmap.

### Detailed Description of an embodiment of the Method

The input to the apparatus or method comprises an interaction-based specification, comprising a hierarchy of high-level activity diagrams and a set of referenced sequence diagrams.

The apparatus or method generates as the output a roadmap, corresponding to the input specification

The first step (step 1) comprises selecting the root High-Level activity diagram. The second step (step 2) comprises (recursively) transforming the current diagram or section into a roadmap fragment. Referenced diagrams and inline expressions are processed in the next step.

The third step (step 3) comprises (recursively) transforming all referenced diagrams and nested sections into roadmap fragments and inserting them into the main roadmap fragment determined at the previous step. The third step also comprises applying patterns for inline expressions to determine additional primitive interaction sections in order to transform inline expressions into assemblies of primitive interaction sections.

An example of the method is described below with reference to Figure 15. At the first step, the root high-level activity diagram is processed (diagram 'example', Figure 8). The roadmap for the high-level activity diagram has the same structure as the diagram itself (as shown in Figure 8). Referenced sequence diagrams receive their positions in the graph and are substituted by their corresponding roadmap fragments at the subsequent steps of the method. The roadmap for the root high-level activity diagram "example" is illustrated in Figure 15.

The method proceeds by recursively processing referenced sequence diagrams Init (Figure 3), Get (Figure 4), Request (Figure 5), Exceed (Figure 6) and Inc (Figure 7), and then inserting the corresponding roadmap fragments into the roadmap of Figure 15 in place of the boxes.

The roadmap fragment for the sequence diagram Init is illustrated in Figure 15. Since actor db is created in this sequence diagram, it does not have any events before it is created, and therefore it is marked as idle at the edge from i2 to i3. Actor db has a separate start node that has to be attached to the root start node of the root roadmap. The root start node is the "triangle" symbol at the roadmap for the diagram "example" that corresponds to the root high-level activity diagram "example".

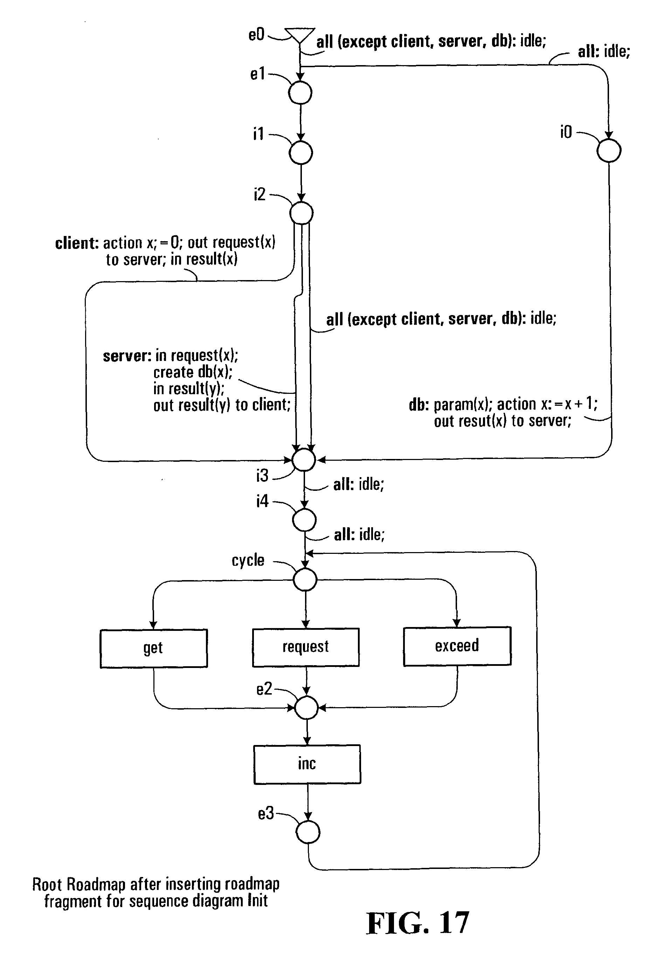

The result of inserting the roadmap fragment for sequence diagram Init into the root roadmap in place of the box Init is shown in Figure 17.

An example of the determination of roadmap fragments for sequence diagrams with inline expressions is illustrated in Figure 10C (for sequence diagram "Get" of Figure 4).

Patterns for inline expressions are also illustrated in Figure 10C and Table 3.

### STEP 2: Generating Event flow diagram from a Roadmap for a selected actor by merging similar events

This algorithm or method creates an event flow diagram (model) for a selected actor and a roadmap corresponding to an interaction-based specification. An event flow diagram comprises nodes and edges that are marked by events for the selected actor in original interaction diagrams in correct order (activities). Each activity connects two nodes, which determines the flow of activities in the event flow diagram. An example of an event flow diagram is illustrated in Figure 9A.

A roadmap comprises *nodes* and *edges.* Edges are marked by actor names or keyword "all" with the possible list of actor names. Edges are also marked by *sequences of* *events,* corresponding to primitive interaction sections of individual sequence diagrams. An example of a roadmap is illustrated Figure 10C and 11A. As mentioned above, a roadmap represents primitive interaction sections and their possible continuations. Continuations for a given primitive interaction section are determined from the sequence of sections in a sequence diagram, from patterns for inline expression(s) as well as from the flow lines of high-level activity diagrams. In one embodiment, a roadmap represents all actors from all individual sequence diagrams. An individual sequence diagram may not refer to all actors involved in the specification. Such actors are assumed to have an empty section in such sequence diagram (idle event). Since these actors are not known during step 1 of the algorithm when individual sequence diagrams are processed, they may be represented by an edge with keyword "all" (with a possible list of exceptions).

A roadmap is non-deterministic in the sense, that there may exist nodes such that the set of outgoing edges has at least two edges marked with the same event. A common situation is when two or more edges are marked with the idle event.

The purpose of the second step of the algorithm is to determine event flow corresponding to a given actor from the total set of actors in the interaction-based specification. This step is repeated for all actors in the interaction-based specification. The event flow graph is made deterministic and idle events are eliminated.

An important property of the method provided by embodiments of the present invention, is that some nodes of the road map are merged as the event graph is determined from a roadmap. The method performs a certain mapping of the nodes of the roadmap into the nodes of the event graph. Certain nodes of the event graph correspond to several nodes of the roadmap. In this case, the group of the roadmap nodes are said to be merged into a single event graph node. Transformation that involves merged nodes produces an event graph that is more deterministic than the original roadmap by combining multiple edges marked with the same event (that may exist in the roadmap) into a single edge in the event graph that leads to the merged node.

The method involves the process of determining a set of new nodes for the event flow diagram as the roadmap is traversed according to its event flow. New nodes are stored in a so-called *node table.* When a new node is determined, the method checks if such node is already present in the node table. If the node is already present, the new node is not added to the event flow diagram. Instead, the existing node from the node table is used. Therefore in this situation the method will create some backward edges, in other words, edges going back to some existing node. If the node is not present in the node table, it is added to the event flow diagram (and to the node table). These edges become *forward* edges.

Whether a certain edge is backward or forward is related to the order in which the method traverses the roadmap.

An important concept for the method is the so-called set *of follow-up nodes.* The set of follow-up nodes is a subset of nodes in the roadmap. All nodes in the set of follow-up nodes may be reached from some other set of nodes by edges marked with the same non-idle event. This event is called the enabled event for the set of follow-up nodes.

An example of an embodiment of the method for generating an event flow diagram from a roadmap is described in more detail below. In this example, the input is roadmap R, and the event flow diagram is generated for actor A.
INPUT: roadmap R
Select: Actor A
OUTPUT: event flow diagram E, corresponding to actor A in R.

(1) Let node queue NQ be empty: {}->NQ. The node queue NQ is used to traverse the roadmap. Each item of the NQ is a set of roadmap nodes.
(2) Let node table NT be empty: {}->NT. The node table NT is used to create edges in the event flow diagram. Each item in the NT is a pair that includes a node from the event flow diagram and the corresponding set of merged nodes from the roadmap.
(3) Use the roadmap R to compute the set N of the follow-up nodes of the start node for actor A (roadmap nodes reachable from the start node for actor A, transitive through idle edges of the roadmap).
(4) Assign new unique event flow node name Ln
(5) Create new event flow node e(N,Ln) (N not in NT). This will become the start node of the event flow diagram.
(6) Add new item (event flow node e and the associated set of merged roadmap nodes N) to the node table: <e,N>->NT
(7) Add new item (set of roadmap nodes N) to the node queue: N->NQ
(8) While there are items in the node queue: NQ != {} repeat the following steps (8.1-8.4):
(8.1) Get set of roadmap nodes N from the node queue N <- NQ
(8.2) Lookup the node table NT and set the current node e that corresponds to the set N in NT: (exist <e,N> in NT).
(8.3) Compute the set of enabled events M for the set of roadmap nodes N for actor A (this is where *merging* is performed)
(8.4) For each enabled event m from M and the current node e repeat the following steps (8.4.1-8.4.3):
(8.4.1) Compute the set of all follow-up nodes N' for actor A (roadmap nodes reachable from the current set of nodes N for actor A, transitive through idle edges in the roadmap R)
(8.4.2) Lookup node table NT with the resulting set N'
(8.4.3) Two situations may arise:
   (A) Such set N' is present in the node table NT (there exists pair <x,N'> in NT, where x is some event flow node)
(8.4.3.1) Add new edge to the event flow diagram marked with current enabled event m from the current node e to the node x from the node table NT (backward edge)
   (B) Such set N' is new (there does not exist any such pair <x,N'> in NT, where x is an event flow node)
(8.4.3.1) Assign new unique node name Ln'
(8.4.3.2) Create new event flow node e'(N',Ln')
(8.4.3.3) Add set of nodes N' and the new node e' as a new item to the node table NT: <e',N'>->NT
(8.4.3.4) Add a new edge to the event flow diagram with the current enabled event m from the current node e to the new node e'(forward edge)
(8.4.3.5) Add new set of roadmap nodes N' to the node queue NQ: N'->NQ

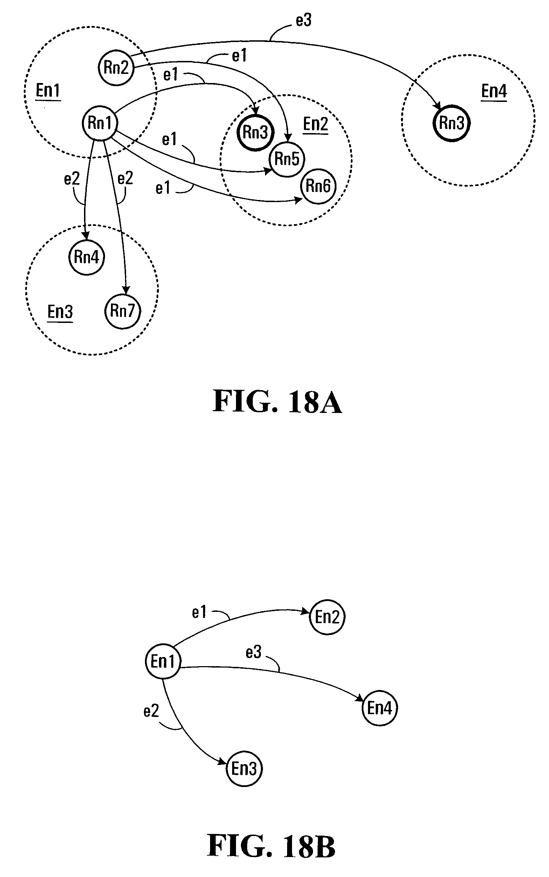

Figure 18A and 18B illustrate the concepts of enabled events, follow-up nodes and merging. Figure 18a illustrates a fragment of a roadmap. For simplicity, the actor name marks have been omitted, assuming that all edges are reachable for the selected actor. Let's consider a certain iteration of the main step (8) of the method, where roadmap nodes Rn1 and Rn2 have been already associated with (merged into) node En1 in the event flow diagram. This means, that the node table NT has the following item: <En1,{ Rn1, Rn2 }>

Let's assume that the edges in the roadmap are marked with a single event: e1, e2 and e3. These are the so-called *enabled events.* An event from the roadmap is called an enabled event for a given roadmap node when the said event can be a valid continuation (next event) for a valid trace that has reached the said node. The corresponding node from the roadmap is called the follow-up node (the node connected to the original node by an edge, marked by the enabled event). Since edges in the roadmap are, in general, marked by the sequences of events, the enabled event is the first event in the sequence.

In Figure 18A, node En1 is the current node. The follow-up nodes are merged per each distinct enabled event. For example, for the enabled event e1, the set of follow-up nodes contains nodes Rn3, Rn5 and Rn6 (reachable from node Rn1). Node Rn3 is also reachable from node Rn2. The set of follow-up nodes contains only distinct nodes from the roadmap. For example, for the enabled event e2, the set of follow-up nodes contains nodes Rn4 and Rn7 (reachable from node Rn1). For example, for the enabled event e3, the set of follow-up nodes contains node Rn3 (reachable from node Rn2). Note that node Rn3 is contained in two sets of follow-up nodes.

Nodes in each set of the follow-up nodes become candidate new event flow nodes.
<En2 ,{Rn3, Rn5, Rn6}>
<En3, {Rn4, Rn7}>
<En4, {Rn3}>

Items in the node table NT are searched for existing nodes with same sets of follow-up nodes. When a node with the same set of follow-up nodes already exist, the new event flow node is not created, the existing event flow node (from the table) is used instead.

Edges, marked with the enabled event are created in the event flow diagram between the current node En1 and the nodes En2, En3 and En4.

The corresponding fragment of the event flow diagram is illustrated in Figure 18B.

The following paragraph describes additional considerations for step (8.4.3) of the above method in order to handle edges in the roadmap that are marked with sequences of events rather than a single event. Edges in the roadmap can be marked with sequences of events, while in the event flow diagram edges are marked with a single event. Step (8.4.3) of he above method shall split sequences of events from the roadmap edges and merge common subsequences in alternative edges. When the sequence is first processed by the above method, the enabled event corresponding to the edge is the first event in the sequence. In case of a roadmap edges marked with a sequence of event, step (8.4.3) of the above method shall, instead of creating a single event flow edge, create a chain of event flow edges and nodes such that the edges between them are marked with the events from the sequence from the roadmap.

By way of example, the steps of the method are described below for the examples in Figures 3 to 8 for actor db.

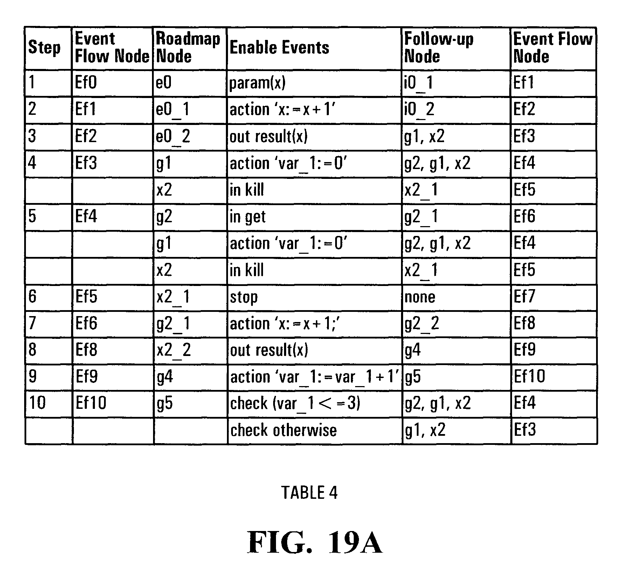

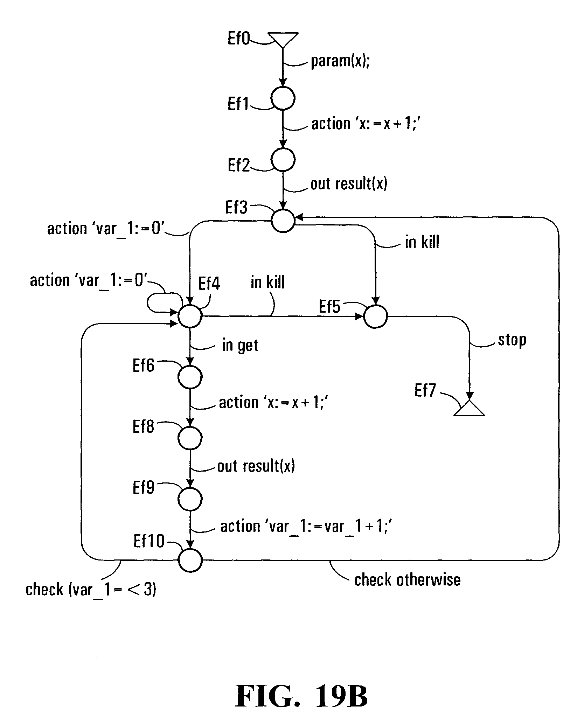

The steps of the method are shown in Table 4 of Figure 19A, and the event flow diagram for actor db is shown in Figure 19B.

The event flow diagram for actor db is generated from the corresponding roadmap, and the roadmap is shown partially in Figure 17.

The method steps will also be described with reference to the roadmap fragments for "Get" (Figure 11B) and "Exceed" (Figure 13) which would have been substituted into the root roadmap (Figure 15) derived from the high-level activity diagram of Figure 8 to generate a complete roadmap.

Step 1 is the initial step of the method. Event flow node Ef0 is the starting node of the diagram (shown in Figure 19B). At this step, the starting node of the roadmap (e0) is considered. There is a single enabling event 'param(x)' as indicated at the edge between nodes 10 and i3 in Figure 17. Since this is the first event of a sequence, a new roadmap node (i0_1) (not shown in Figure 17) is created to split the sequence. Step 2 continues to split the sequence starting at the original roadmap node 10.

At step 3, there is a single enabling event 'out result(x)', corresponding to the last event in the sequence starting at the node 10. However, there is more than one follow-up node, since there are chains of edges marked with idle going into roadmaps for sequence diagrams get, and exceed. There are two follow-up nodes: g1 (roadmap for sequence diagram Get, (see Figures 10C and 11b) and x2 (roadmap for sequence diagram Exceed, see Figure 13). Roadmaps for diagrams Request and Inc do not have any events for actor db and therefore do not contribute to any follow up nodes when creating the event flow diagram for this actor. According to the method, a combined event flow node (Ef3) is created corresponding to roadmap nodes g1 and x2.

At step 4, event flow node Ef3 is considered. Since it corresponds to two roadmap nodes, each node g1 and x2 is considered. Node g1 has a single enabling event 'action var_1:=0' (see Figure 11B). There are several follow-up nodes for this event: g2 (following the edge to get_2, Figure 10C and as shown in Figure 11b) as well as nodes g1 and x2. Node g1 is a follow up node to g1 as there is a path back to g1 where db has only idle events, as can be seen in Figures 10C and 11B, by following edge to get_loop_skip, then through nodes g6, g7, g8 or g9, then through the roadmap of diagram Inc, as shown in Figure 14 and 17, back to node "cycle" to the same configuration as at Step 3). A new event flow node (Ef4) is created for roadmap nodes g2, g1 and x2.

Node x2 has a single enabling event 'in kill' with a single follow-up node that splits the sequence (in kill; stop) at the edge from node x2 to node x3 (see Figure 13). A new event flow node (Ef5) is created for a sequence-splitting node x2_1.

At step 5, event flow node Ef4 is considered. At this point, the node queue contains node Ef5, which will be considered later. Node Ef4 has three enabling events: 'in get' with a follow-up node a sequence-splitting node g2_1; and two more events that are same as the node Ef3. A new event flow node (Ef6) is created for sequence-splitting node g2_1. No extra nodes are created for the follow-up nodes of other enabling events, since these nodes are already available (and are present in the node table NT).

Steps 6,7,8 and 9 finish splitting sequences x2_1 (Figure 13) and g2_1 (Figure 11B).

At step 10, event flow node Ef10 is considered (roadmap node g5). This node has two enabling events, corresponding to the two branches of the alternative (see Figures 10C and 11B). No extra nodes are created at this step, since the follow-up nodes are already present in the node table NT.

Figure 19B illustrates the complete event flow diagram for actor db. In the event flow diagram, Node Ef4 has a backward edge marked: action 'var_1=0' returning to itself, as node Ef4 is determined as the follow up nodes in the road map for this enabled event (g2,g1,x2) previously has a corresponding event flow node (Ef4) in the node Table 4. Similarly, node Ef10 has backwards edges to both Ef3 and Ef4, since the corresponding road map nodes have a respective set of follow up nodes for which an event flow node (Ef3 and Ef4) has already been created and which exist in the node Table 4.

### Method 2: Transforming an Event Flow Diagram with Implicit Decisions on Data into an Equivalent Event Flow Diagram with Explicit Operations on Data

Embodiments of the present invention provide an apparatus and method for transforming an event flow diagram with implicit decisions on data into an equivalent event flow diagram with explicit operations on data. Examples of the method are described in detail below, and embodiments of the method may be implemented by the Event Flow Transformation Section 123 of the synthesizer 117 of Figure 1A, for example.

A prerequisite of the method is an event flow diagram for an actor. The event flow diagram involves input activities; check activities as well as actions involving data.

*Implicit decisions* involving data include alternatives in interaction-based specifications that have a plurality of branches each of which starts with input of the same signal but with different values of parameters. An example of this is alternative 1 of the sequence diagram 'Request' shown in Figure 5, with messages 2 and 6.

Examples of *explicit operations on data* include the following:
(a) Sending and receiving messages with parameters. For example, "sending message with parameters", is included in the sequence diagram of Figure 3, as events 2 and 7 for instance, and "receiving a message with parameters" is also shown in Figure 3 as events 3 and 8, for example.
(b) Local actions involving data. An example of this is shown in Figure 3 as events 1 and 6.
(c) Decisions involving data. An example of this is shown in the sequence diagram of Figure 4 as events 14 and 17 in alternative 12.
(d) Loops involving data. An example of this is shown in Figure 4 as loop 4 with condition 5.

Explicit operations on data assume a certain data *language* to declare variables, data types, assignments to variables, expressions, etc. A particular data language is not critical for the purposes of the invention.

The present method provides a transformation of an event flow graph (diagram) with implicit decisions involving data to an equivalent event flow graph (diagram) with only explicit operations on data.

Embodiments of the method may involve any one or more of the following transformations:

### 1. "Single parameter, different constant values" case.

In this case, one node in the event flow graph has multiple outgoing edges marked with input events with the same message, involving a single parameter, such that each input event has a different constant data value as the parameter of the message. The method of transformation comprises the following steps:
(a) Create a new unique local variable;
(b) Create a new unique node;
(c) For each input event in the original node add an edge from the new node with a check that the value of the local variable is equal to the parameter value;
(d) Connect new edge to the same target node as the original input event;
(e) Remove the original input edges from the original node;
(f) Create a single input edge marked with an input event of the original message with the local variable as the parameter, connecting to the new node.

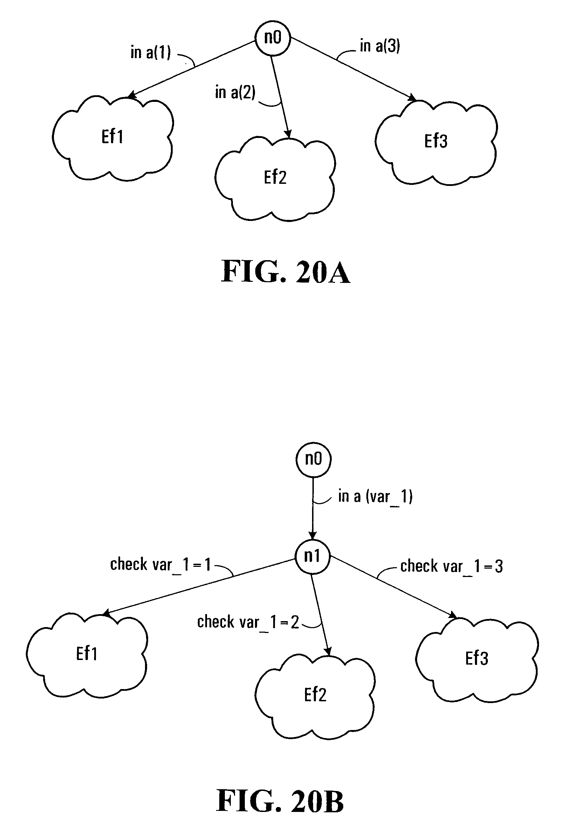

An example of this transformation is illustrated in Figures 20A and 20B.

In Figure 20A, the input event flow diagram has node n0 with three outgoing edges marked with input events. These input events involve the same message, "a", with a single constant parameter. Each of the three input events specifies a different constant value of the parameter. Ef1, Ef2 and Ef3 represent continuations of each edge (arbitrary subdiagrams, that may even overlap with each other) and are used to illustrate the transformation.

The result of the transformation is shown in Figure 20B, and the transformation results in a new unique node n1 being created. Original edges marked with input events are removed. Instead, there are three new edges marked with check events, from the new node n1 to the same continuations as the original edges (Ef1, Ef2 and Ef3, respectively). There is a single node from the original node n0 to the new node n1 marked with an input event containing a new unique variable, (var_1). Outgoing check events from node n1 check the value of the new variable var_1 against the corresponding constants.

Other (overlapping) cases are possible and are transformed in a different way, examples of which are as follows:

### 2. "Single parameter, different constants and a single variable" case.

In this case a new variable is not created but the existing variable is used for assignment of the input parameter and then used for further checks._The method of transformation comprises the following steps:
(a) Create an otherwise edge that connects to the node corresponding to a variable;
(b) Remove the original input edges from the original node;
(c) Create a single input edge marked with an input event of the original message with the variable as the parameter connecting to the check node.

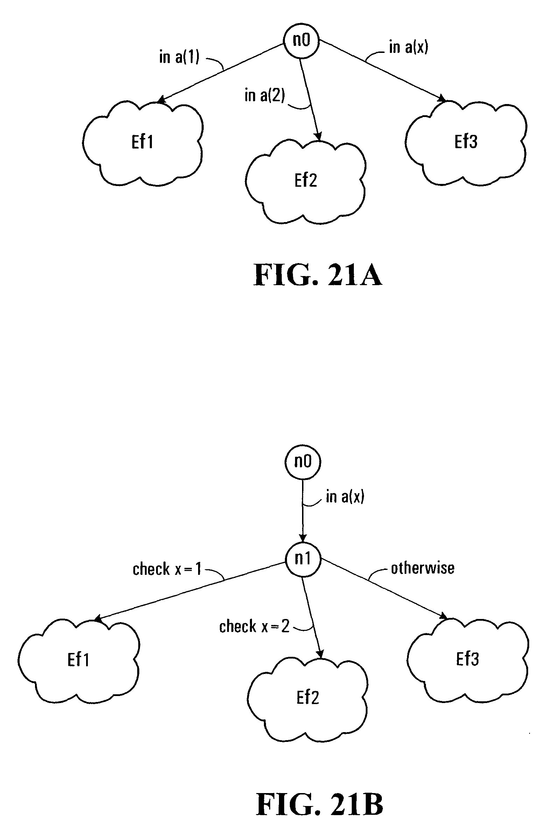

An example of this transformation is illustrated in Figure 21A and B.

In Figure 21A, the input event flow diagram has node n0 with three outgoing edges marked with input events. These input events involve the same message, "a", with a single constant parameter. Two of the three input events mention a different constant value. However, this case is different from the "single parameter, different constants" example described above, because one event already uses a variable to receive the parameter of the message, "a". Ef1, Ef2 and Ef3 represent continuations of each edge (arbitrary subdiagrams, that may even overlap with each other), and are used to illustrate the transformation.

The result of the transformation is shown in Figure 21B and the transformation results in the creation of a new unique node, n1. Original edges marked with input events are removed. Instead, there are three new edges marked with check events, from the new node n1 to the same continuations as the original edges (Ef1, Ef2 and Ef3, respectively).

There is a single edge from the original node n0 to the new node n1 marked with an input event containing the existing variable (x). Outgoing check events from node n1, corresponding to the input events with constants, check the value of the variable x against the corresponding constants. The edge corresponding to the input event with a variable (x) is marked with "otherwise".

### 3. "Single parameter, some alternatives share the same constant" case.

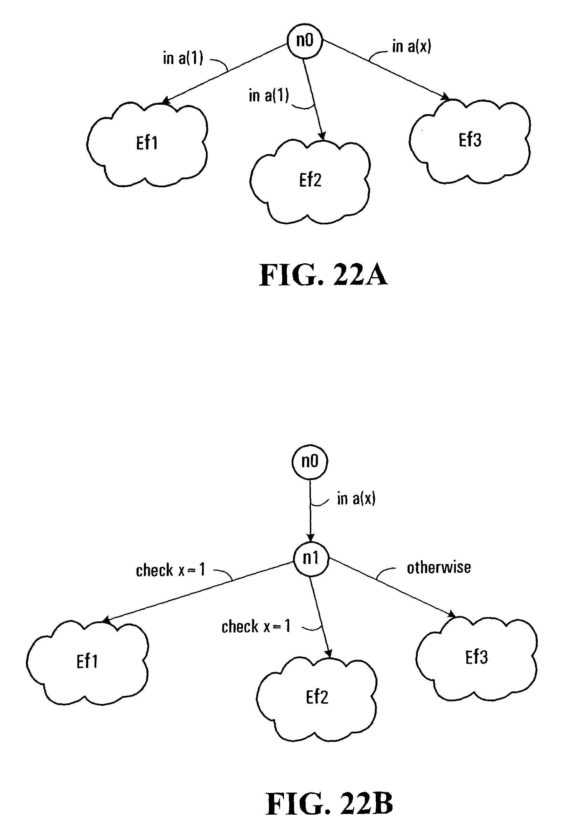

This case is similar to the previous two (depending on whether or not a single variable is also used). However, when multiple alternatives share the same constant, this means that from the execution perspective, the interaction-based specification was *non-deterministic* (i.e. it does not contain enough information to select a particular alternative, even based on the value of the actual message parameter). This non-determinism is propagated to the resulting event flow diagram, in which the new node will have multiple edges, marked with the same check event. An example of this transformation is shown in Figure 22A and 22B.

Referring to Figure 22A, the input event flow diagram has node n0 with three outgoing edges marked with input events. These input events involve the same message "a" with a single constant parameter. Two of the three inputs mention the same constant value and the third input event uses a variable to receive the parameter of the message "a". Ef1, Ef2 and Ef3 represent continuations of each edge (arbitrary sub-diagrams, that may even overlap with each other) and are used to illustrate the transformation.

The result of the transformation is shown is Figure 22B, and the transformation results in the creation of a new unique node, n1. Original edges marked with input events are removed. Instead, there are three new edges marked with check events, from the new node n1 to the same continuations as the original edges (Ef1, Ef2 and Ef3, respectively).

There is a single edge from the original node n0 to the new node n1 marked with an input event containing the existing variable (x). The two outgoing check events from node n1, corresponding to the input events with the same constants, check the value of the variable (x) against the corresponding constant. The edge corresponding to the input event with a variable (x) is marked with "otherwise", for example shown in Figure 21B.

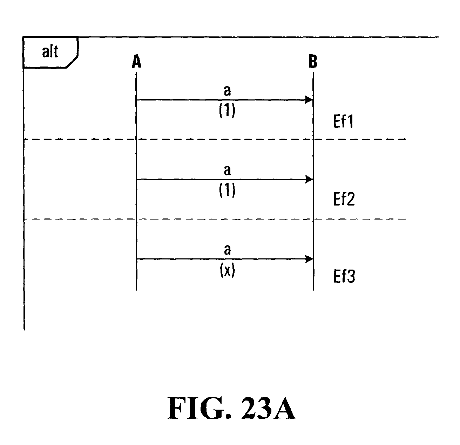

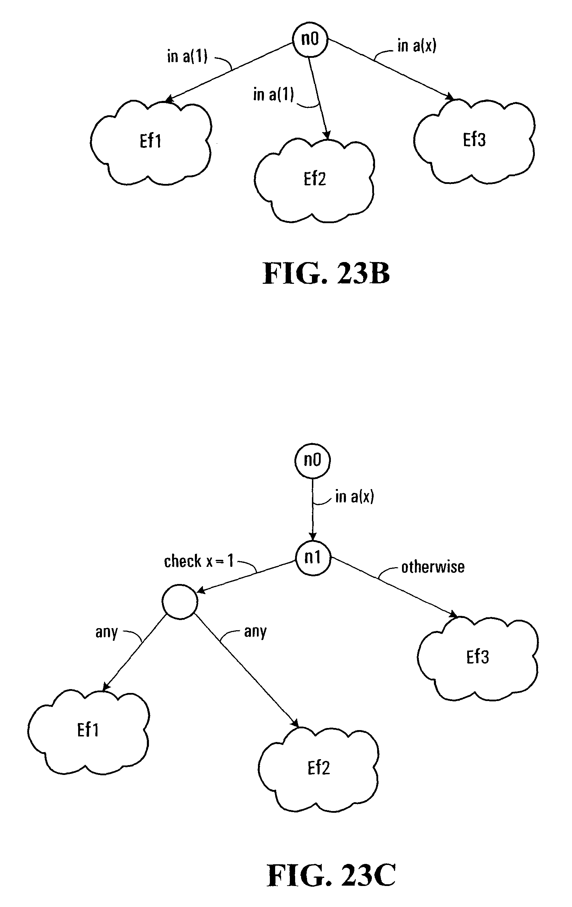

The non-determinism in the event flow graph can be made more explicit by introducing a special check event, called "any". The meaning of the "any event" is as follows: when a certain node in the event flow graph has multiple edges marked with an "any" event, then this indicates a non-deterministic choice, and an arbitrary branch should be selected as the continuation. Figure 23A shows an example of a sequence diagram involving three possible (alternative) input events and their respective continuations, Ef1, Ef2 and Ef3, Figure 23B shows a corresponding event flow diagram with implicit decisions, and Figure 23B illustrates an example of a transformation of the Figure 23B involving an "any event", with explicit decisions on data. The transformation involves changing a combined receive event with data into a separate 'receive' event and a separate 'decision' event on the data received, that can take place after the receive event. Advantageously, this simplifies the event flow diagram for conversion into a state-based diagram for simple virtual state-machines. This advantage applies to the other transformation examples described herein.

Referring to Figure 23B, the input flow diagram includes node n0 with three outgoing edges marked with input events, and corresponds to Figure 22A. The transformation results in the formation of the new node n1 (Figure 23C) and another node with two outgoing edges marked "any" each going to continuations Ef1 and Ef2, respectively. The starting node n0 has an outgoing edge to new node n1 marked with an input event containing the existing variable (x). Node n1 is connected to the other node by an edge marked with a check event which checks the value of the variable (x) against the constant corresponding to that contained in the input events of the original event flow diagram of Figure 23B. The edge corresponding to the input event with a variable (x) is marked with "otherwise", as for the transformation of Figure 22B.

### 4. "Single parameter, constants, multiple variables" case.

This case, where multiple alternatives use different variables to assign the value of the message parameter, is similar to the previous one, because this also means that from the execution perspective, the interaction-based specification was *non-deterministic* (i.e it does not contain enough information to select a particular alternative). This non-determinism is propagated to the resulting event flow diagram, using the any-events. An example of the transformation method comprises the following steps:
(a) Select the first variable for assignment of the input parameter (and subsequent checks for constants as in case 2 or 3);
(b) Handle all alternatives with constants, as in case 2 or 3. This will create a new unique node (n1). This node will be used below. Note, that if some of the constants are shared, more any-events will be created when handling constants;
(c) Create an additional new unique node n2, (placeholder for any-events);
(d) Create an otherwise check edge, between nodes n1 and n2;
(e) Create an any-edge for the variable, selected above, attach to the corresponding continuation (Ef2);
(f) For each remaining variable (other than the selected one):
   (i) Create a new unique node (n3)
   (ii) Create an any-edge to the new node n3
   (iii) Create a new edge from the node n3 to the continuation, corresponding to the current variable (Ef3), mark the edge with an action, assigning the selected variable to the current variable (y:=x)

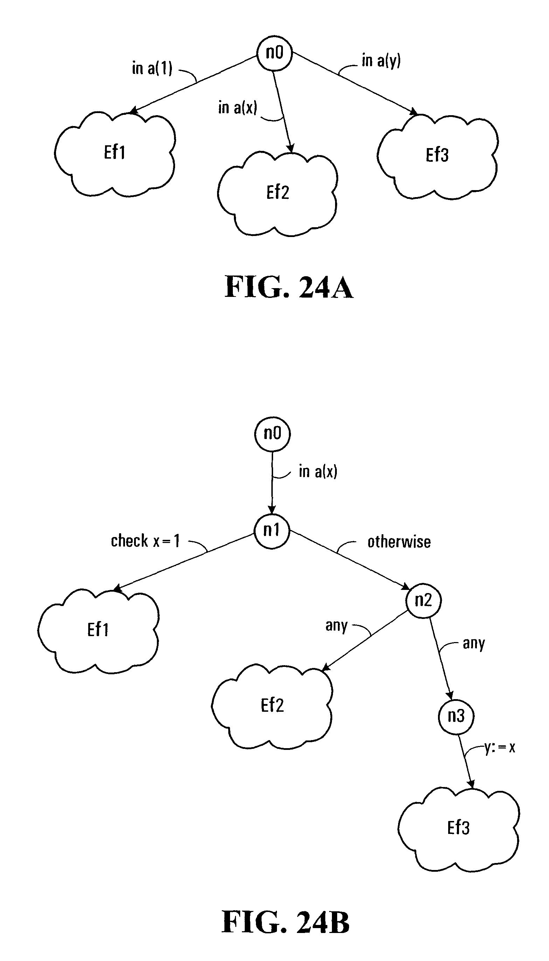

An example of this transformation is illustrated in Figures 24A and 24B.

Referring to Figure 24A, the input event flow diagram has node n0 with three outgoing edges marked with input events. These input events involve the same message, a, with a single parameter however the first of which is a constant (1) and the second and third are variable (x) and (y). Ef1, Ef2 and Ef3 represent continuations of each edge, (arbitrary sub-diagrams, that may even overlap with each other), and are used to illustrate the transformation. The result of the transformation is shown in Figure 24B. The transformation results in the creation of three new nodes, n1, n2 and n3. The outgoing edge from one of the starting node n0 to new node n1 is marked with input event containing of the existing variables (x). An outgoing check event from node n1, corresponding to the input event with constant (1), checks the value of the variable (x) against the corresponding constant. A second outgoing edge from node n1 to node n2 is marked "otherwise". Node n2 has two outgoing edges marked "any" which split the input event into two non-deterministic branches, one of which leads to the continuation Ef2, as for the original event flow diagram of Figure 24A. The other branch, i.e. "any-edge" is connected to new node n3. A new edge is created from node n3 to the continuation of Ef3, which corresponds to the current variable (y), and is marked with an action which assigns the selected variable (x) to the current variable (y).

### 5. "Single parameter, no constants, multiple variables" case.

This situation is similar to case 4, but there are no constants to handle. The non-determinism, caused by multiple alternatives that are only different in what variable the message parameter is assigned to, is propagated to the resulting event flow diagram, using the any-events.

An example of the transformation method comprises the following steps:
(a) Select the first variable for assignment of the input parameter;
(b) Create an additional new unique node n1, (placeholder for any-events);
(c) Create an any-edge for the variable, selected above, attach to the corresponding continuation (Ef1);
(d) For each remaining variable (other than the selected one):
   (i) Create a new unique node (first n2, then on a new iteration it will be n3);
   (ii) Create an any-edge to the new node n2;
   (iii) Create a new edge from the node n2 to the continuation, corresponding to the current variable (Ef2), mark the edge with an action, assigning the selected variable to the current variable (y:=x)

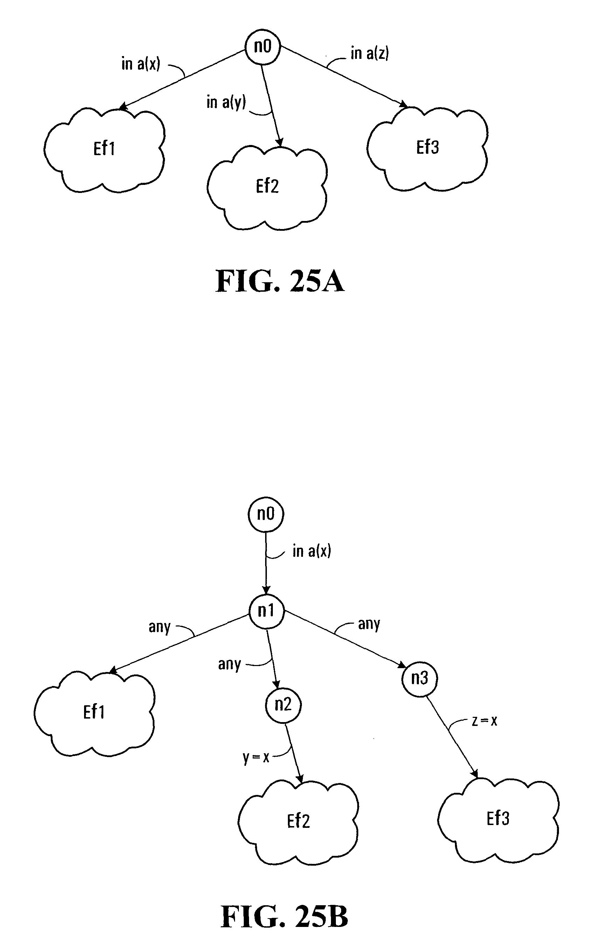

An example of this transformation is shown in Figures 25A and B.

Referring to Figure 25A, the input event flow diagram has node n0 with three outgoing edges marked with input events. Each input event involves the same message, "a", with a single parameter, each having a different variable, x, y and Z. Ef1, Ef2 and Ef3 represent continuations of each edge (arbitrary sub-diagrams, that may even overlap with each other) and are used to constrain the transformation.

The result of the transformation is shown in Figure 25B. The transformation results in the creation of three new nodes n1, n2, n3. As in the previous examples, there is a single edge from the original node n0 to the new node n1 marked with an input event containing one of the variables (x). An "any-edge" from the new node n1 for the selected variable x) is attached to the corresponding continuation Ef1.

For each of the remaining variables y and z, new nodes n2 and n3, respectively are created and "any edge" is created from node n1 to each of nodes n2 and n3. A new edge is then created from each new node n2 and n3 to the respective continuations Ef2, Ef3 and the edges marked with an action assigning the selected variable (x) to the current variable (y and z).

### 6. "Multiple parameters" case.

An example of this transformation method comprises the following steps:
(a) Create multiple local variables one for each parameter.
(b) Create a cascade of checks.

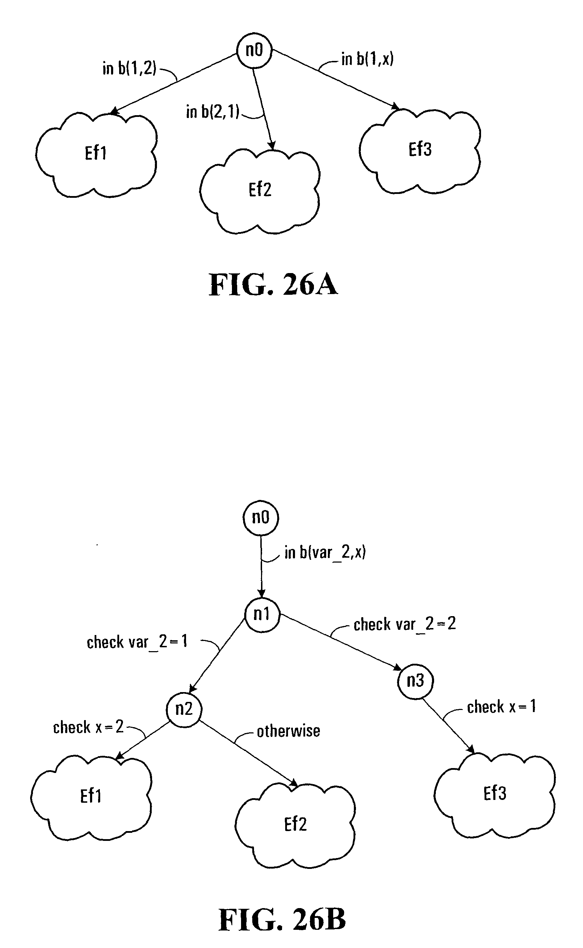

An example of this transformation is illustrated in Figure 26A and 26B, for a combination of sub-cases 1 for the first parameter (constants, no variables for the first parameter) and sub-case 2 for the second parameter (constants and a single variable for the second parameter).

In Figure 26A, the message b (with two parameters) is received, and parameters are stored in two variables. The variable corresponding to the first parameter is new and unique (var_2), while the existing variable (x) is used for the second parameter. The first level of checks deals with the first parameter. Then, for each alternative, the second level of checks deals with the remaining (second) parameter.

In more detail, the input event flow diagram shown in Figure 26A has node n0 with three outgoing edges marked with input events. Each input event involves the same message, "b". The first input event to continuation Ef1 has two constant parameters, 1, 2. The second input event to continuation Ef2 has two constant parameters 2, 1. The third input event to continuation Ef3 specifies a constant parameter 1 and variable parameter (x).

The result of the transformation is shown in Figure 26B. A new node n1 is created with a single edge from the original node n0 to new node n1 marked with an input event in which the constant parameters 1, 2 and the corresponding first and second input events are for Figure 26A are replaced with new local variable 3AR 2. The original input event to continuation Ef1 is replaced by a first edge from node n1 to a new node n2 with a check for var 2 corresponding to the value 1 in the original input event, and a second edge to the continuation Ef1 from node n2 marked with a check for the value of variable x. Another edge marked "otherwise" is created from node n2 to the continuation Ef3 which corresponds to the third input event in the original event flow diagram of Figure 26A. The second branch is also created from node n1 which corresponds to the second input event to continuation Ef2 in the original event flow diagram and includes a first edge to node n3 and marked with a check for the value of the local variable var2 corresponding to the value of the second input event, and a second edge from node n3 to the continuation Ef2 marked with a check for the value of variable x corresponding to its value in the second input event of Figure 26A.

The purpose of these transformations is to convert the event flow diagram into a diagram that can be more easily transformed into a state-based diagram using a relatively simple virtual machine (state machine). However, this transforming step is not essential for the conversion of event flow diagrams with implicit decisions on data into a state-based diagram if the virtual machine is more sophisticated.

In primitive actions for event flow, a node can receive something, send something, make a decision or perform an action according to Table 1. The transformation step converts an input with an implicit decision into an input having a variable which is then stored, and generates a new node from which the edge is marked with a decision, e.g. check the value of the variable.

The transformation from an interaction-based diagram to an event flow diagram convert a more pictorial view of the system into a more programmatic view of the system. In the transformation, the receive event plus variable, which implies a decision, is split into a receive event and a decision event which can be performed later. This assists in generating the state-based diagram which is driven by one event at a time where the basic state-machine does very simple operations.

### Method 3: Consolidating all Data Flows for Selected Actors in an Interaction-Based Specification

Sequence diagrams describe collaborations of a number of actors. The methods described above are capable of producing an event flow graph for a single actor. The event flow graph is the basis for an executable program, corresponding to a single actor. When executable programs for each actor are assembled together and allowed to communicate, the collective behaviour approximates the behaviour of the original interaction-based specification. However, there can be situations, where individual executable programs, corresponding to actors may run out of synchronization. This can happen especially often when the interaction-based specification uses loops with conditions such that the guard uses one or more local variable(s) of one of the actors. This may create a problem that other actors (who do not have access to these variables) run out of synchronization with the "main" actor of the loop. For example, one actor may decide that the loop has finished, while the "main" actor (which owns the guard variable) decides to continue the iterations.

The present method describes how to transform sequence diagrams so that some or all actors are merged together producing a new (consolidated) actor in such a way that all data flows for selected actors are preserved in the consolidated actor. The same transformation can also handle a global renaming of actors. The transformation can be driven, for example, by a *deployment configuration file* that describes which original actors are to be consolidated into (merged into) a new actor. Multiple deployment configuration files can be used with the same set of interaction diagrams.

A consolidation operation can be used for multiple purposes; including:
(1) Preventing divergence of actors in the executable program, derived from the interaction-based specification (each actor consolidates all data flows, the resulting actors share the same actions);
(2) Merging a plurality of actors into one, for example, when multiple actors represent a logical decomposition of a single actor.

A consolidation operation takes the following inputs:
(a) the source specifies one or more actors that are being merged together,
(b) the scope (non-overlapping sets of actors with the source) specifies the actors from which data flows are preserved; the scope marked by an asterisk "*" specifies the data flows for all actors in the interaction-based specification; and
(c) the target of the consolidation (either belongs to the source or is a new actor) specifies how the actor has to be named in the transformed specification.

The consolidation operation assumes the visual order of events is equal to the total order of events, for interactions between the consolidated actors and the rest of the actors in the interaction-based specification. This is always true, for example, in the situation when all actors in the interaction-based specification are consolidated as a single actor.

An example of an embodiment of the method for consolidating selected actors in an interaction based specification comprises the following steps:
Read deployment configuration file;
For each line in the deployment configuration file, specifying the source, the scope (non-overlapping sets of actors) and the target of the consolidation (either belongs to the source or new):
Create mapping of old actors to new actors;
For each interaction diagram:
Transform the interaction diagram in the following way:
For each actor in the old interaction diagram
a) Transform declarations of actors:
If actor belongs to the source set - remove it Otherwise - keep it;
Create declaration for the target of the consolidation;
b) Transform events:
For all events in the total visual order of occurrence (for all actors)
For an interaction between actor in the source and actor in the scope - create same interaction between the target and the actor in scope; add corresponding data flow to target;
For an interaction between actors in scope - add corresponding data flow to target;
For an interaction between actors in the source - add corresponding data flow to target;
For an action in source or in scope- transform the action and add to target;
For a guard in scope - transform the guard and add to target;
For a timer event - transform the expression and add to target;
For a create event to actor in the source - add corresponding data flow to the target;
For a create event not involving the source - keep create event, add corresponding data flow to the target;
For an inline expression, which involves actors in the scope- extend the scope of the inline expression to the target;
For an inline expression, which involves only the actors in the scope- create inline expression to include the target;
Variables may be transferred during consolidation by prefixing each variable with the name of the original actor, for which the variable was declared;

Additional variable declarations may be added to the target actor (corresponding to the variables from the scope of the consolidation).

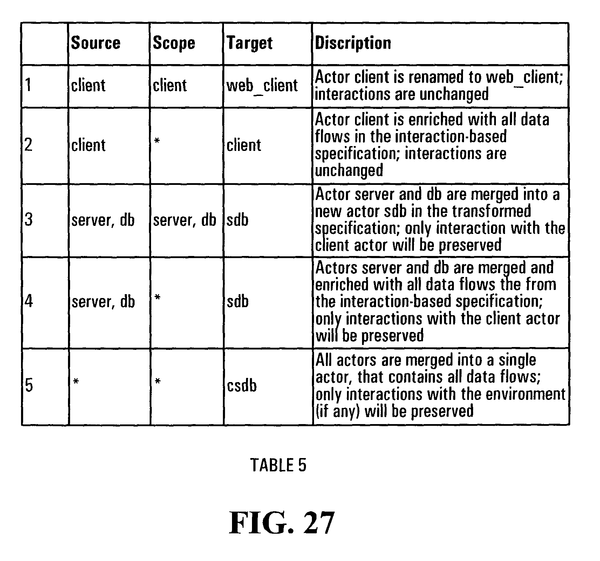

Figure 27, Table 5 shows an example of a deployment configuration file for these three actor example system of Figure 2. The configuration file contains a number of examples in which components of the system can be consolidated and specifies the inputs; source, scope and target for each example, as well as a description of the consolidation.

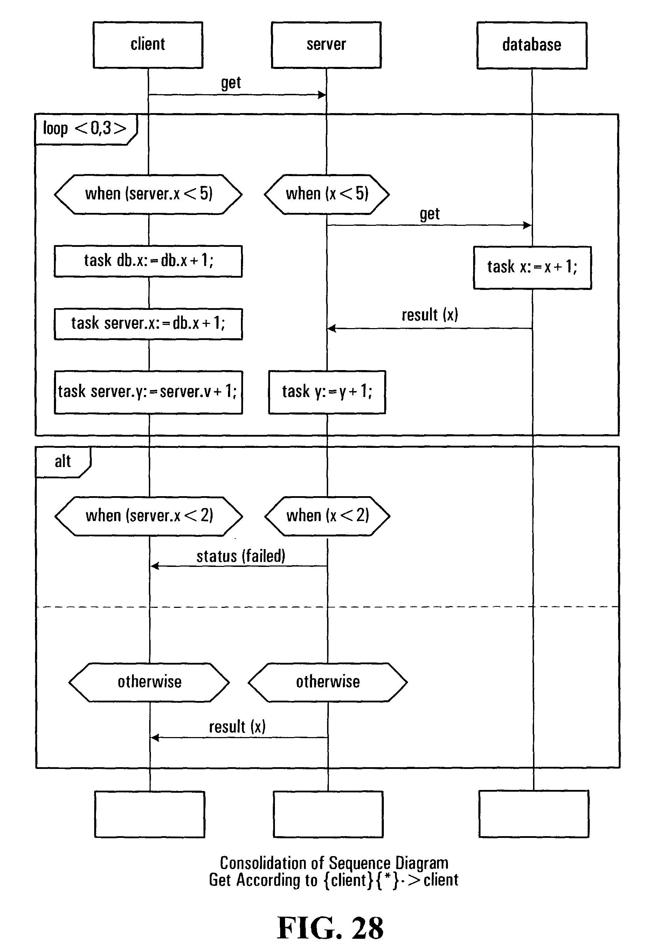

Figures 28 to 31 show examples of a consolidated system for examples 2 to 5, respectively, in Table 5 of Figure 27. In particular, Figure 28 shows a consolidation of sequence diagram Get (Figure 4) according to example 2 of Table 5 in which the source is "client", the scope is "*", i.e. the data flows of all actors in the interaction based-specification are to be imported into the target actor, and the target actor of the consolidation is named "client".

In the loop frame of Figure 28, a lifeline for the target "client" is created and is populated by inline expressions derived from the server and database (db). The consolidated actor includes the guard condition corresponding to the guard condition of the server, the tasks associated with the database and server, which include "task server x:=db.x+1", which is derived from result (x) received by the server from the data base. It is to be noted that the variables x in the data flows of the consolidated actor are marked with the name of the actor form which they are derived to preserve the meaning of the variable, which may be different for different source actors. The simple interactions without data in the original sequence diagram (e.g. "get" from server to database) do not appear in the target actor, but the ordering of data flows enforced by the simple interactions is preserved, e.g. "get" indicates that "when (x<5)" in server precedes task x: x+1 in db.

In the alt frame in Figure 28, the lifeline of the target "client" contains both the guard condition and "otherwise" specification (or instruction" associated with the server. Again, the variable x in the guard condition derived from the server is indicated as that of the server.

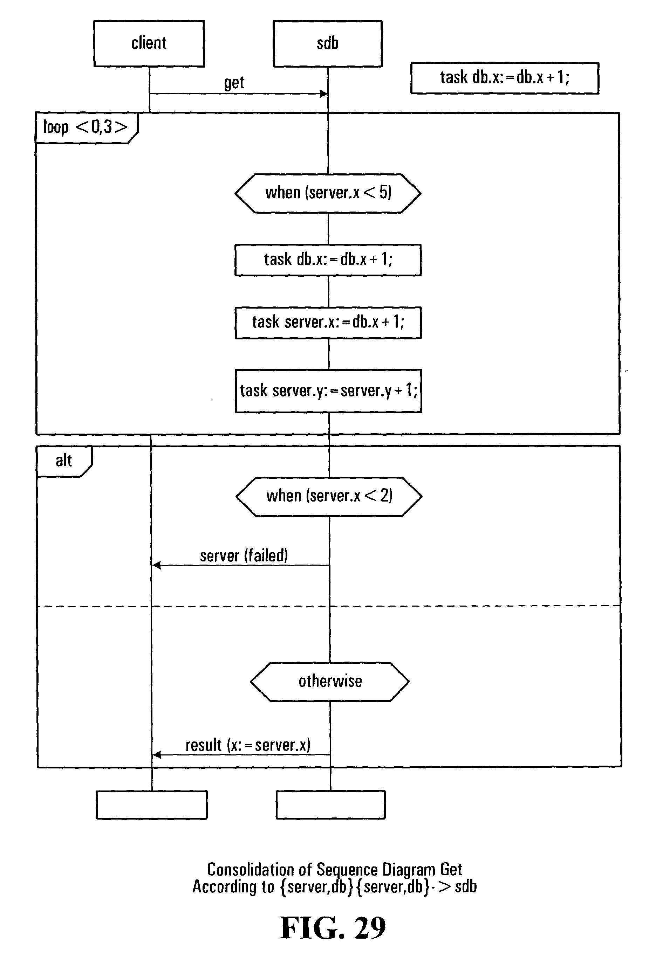

Figure 29 shows an example of a consolidation of sequence diagram Get (Figure 4) where the source actors are the server and database, the scope is the actors server and database and the target is a new actor: "sdb". In this case, a new actor sdb is created and has a lifeline in each of the loop and alt frame. In the loop frame, the lifeline of the target or new actor sdb is populated with the combination of inline expressions from the original actors server and database, as shown in Figure 4. In the alt frame, the lifeline for the target actor sdb again contains the combination of inline expressions for original actors server and db, which in this case corresponds to the inline expressions of the original actor "server" as there are none for the original actor db in Figure 4.

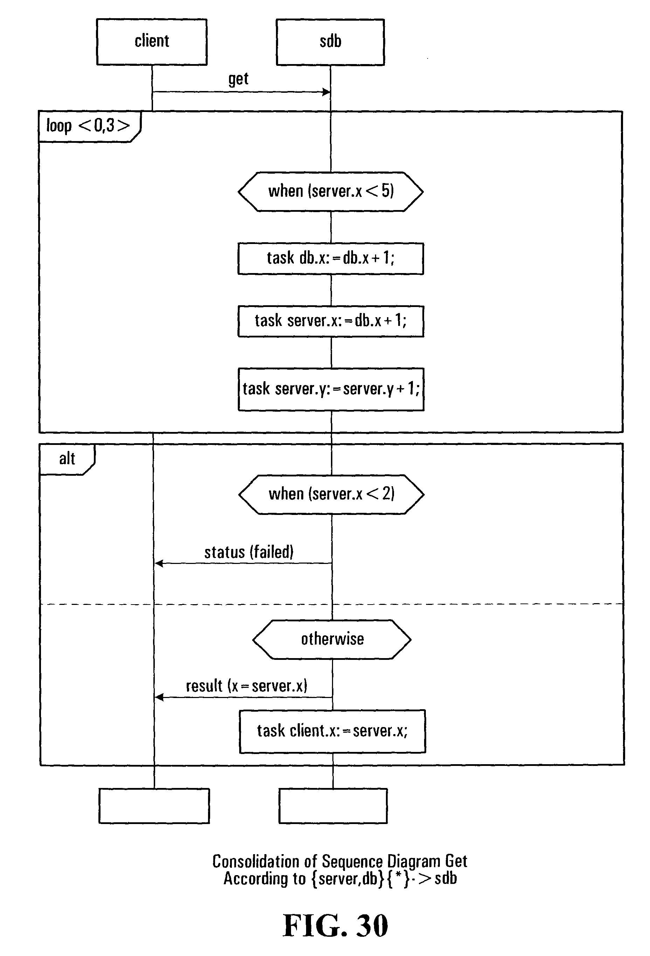

Figure 30 shows an example of a consolidation of sequence diagram Get where the source is the server and database, the scope is the data flows for all actors in the interaction-base specification, and the target is a new actor "sdb".

In Figure 30, the consolidated sequence diagram includes actors client and target actor sdb. The lifeline for new actor sdb in the loop frame contains the guard condition and task of the original actor server, the task associated with the original actor db and a new task which corresponds to the server receiving the result x from the original actor: database.

The lifeline of the new actor sdb in the alt frame of Figure 30 contains the original guard condition, and specification "otherwise" associated with the original actor: server, and an additional task associated with client, which corresponds to the client receiving the result (x) from the server in the original sequence diagram of Figure 4.

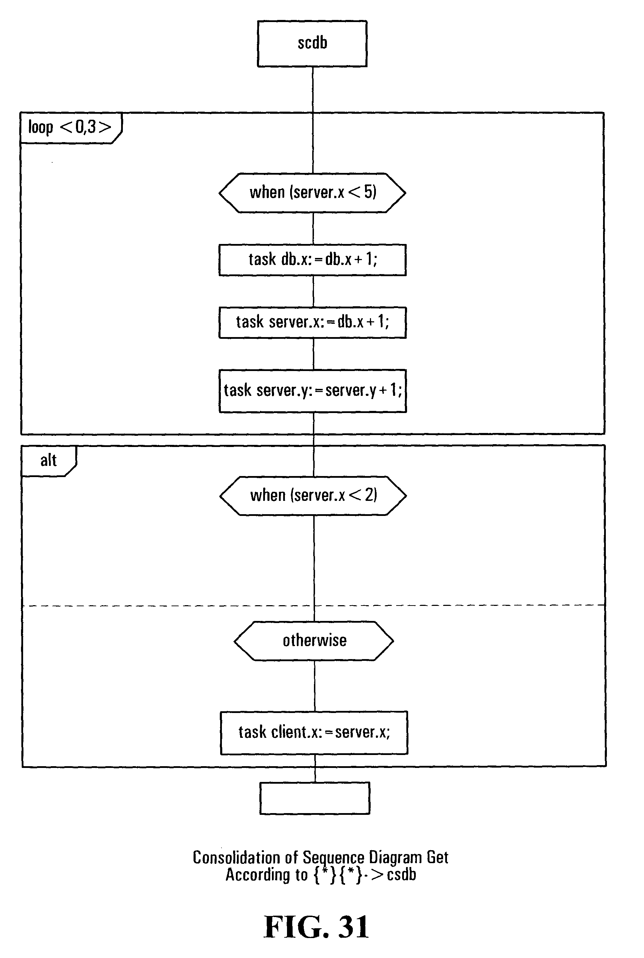

Figure 31 shows an example of a consolidation for sequence diagram Get (Figure 4) where the source comprises all actors, the scope comprises the data flows for all actors and the target comprises a single new actor "scdb". The sequence diagram contains a single actor sdb with a single lifeline. The lifeline in the loop frame includes the combination of all inline expressions for all old actors in the original loop frame of Figure 4, and the lifeline in the alt frame includes the inline expressions of the original alt frame of Figure 4 including a new inline expression which corresponds to the client receiving the result x output from the server.

Consolidation can generate one or more subsets of actors of a system to reduce the number of individual components of within a system under test (SUT). For example, a car may have actors: dashboard, control, console, and radio. The user may not be able to interface directly with one or more components, or view their operation(s), but only observe their effect through another component of the system. In this case, the latent components can be consolidated into a reduced number components to hide the specifics of there interactions and test the system from different views. Generating different views of the system allows an operator to perform different tests, and may simplify testing of large systems for example which contain a large number of components.

### Method 4: Generating a state-based diagram from an Event Flow Diagram

Embodiments of the invention comprise apparatus, method and computer program for generating a state-based diagram from an event flow diagram. Embodiments of the method may be performed by a state-based diagram (model) generating section, for example as shown in Figure 1A.

This method transforms an event flow diagram into a state-based diagram that uses states to handle input events. A state-based diagram is different from an event flow diagram: in an event flow diagram all nodes are uniform (a node can have outgoing edges marked with any single event), while in a state-based diagram 1) edges can be marked with sequences of events (similar to a roadmap), and 2) there are several types of nodes, which have different rules regarding the sequences of events in the outgoing edges.

Unlike to uniform nodes in an event flow diagram, a state-based diagram involves the following types of nodes:
(1) Basic state node: All outgoing edges are marked with a sequence of events, that starts with an input event; all input events are distinct, input events can not occur anywhere else in the sequence, sequence of events does not contain check events),
(2) Mixed state node: Some outgoing edges are marked with sequences of events, that start with an input event, and some are not; some edges may contain a single check event, otherwise sequence of events do not contain check events; input events do not occur anywhere else in the sequence, except at the first position in some sequences),
(3) ANY state node: These are non-deterministic choice nodes, in which outgoing edges are marked sequences with non-input events, and check events do not occur in the sequences,
(4) Check state node: Outgoing edges are marked with a single check event, exactly one edge can be marked with an "otherwise" check, and
(5) Assert state node. This has a single outgoing edge marked with a single check event.

An *active sequence* of events is any sequence of the following *active* events: out, action, settimer, stoptimer, create, param, stop. A active sequence can be empty. An input event is an in, or timeout events. The list of events in provided in Table 1 at Figure 9B. Thus event sequences of basic state edges start with an input event followed by an active sequence. Event sequences of mixed state edges start with an input or check event, followed by an active sequence. Event sequences of ANY state edges are active sequences. Event sequences of check state edges start with a check event flowed by an active sequence. Event sequences of an assert state edge start with a check event flowed by an active sequence.

A *virtual machine,* corresponding to a state-based diagram has the following behaviour:

In a *basic* state node, the virtual machine *waits* for one of the inputs (edge marked with an input event), then performs the corresponding transition (all events in the active sequence, until another state node). If the current input message does not match any of the input events in the basic state node, the virtual machine throws an exception and stops.

In a check state node, the virtual machine evaluates expressions in check events and selects one edge in which such expression evaluates to true and performs the corresponding active sequence. If all expressions evaluate to false, and there is an "otherwise" check, the virtual machine selects the edge, corresponding to the otherwise check and performs the corresponding active sequence. If all expressions evaluate to false, and there is no otherwise check, the virtual machine throws an exception and stops.

In an *assert* node, the virtual machine evaluates the expression in the single check event. If this expression evaluates to true, the virtual machine performs the corresponding active sequence, and selects the next state. If the expression evaluates to false, the virtual machine throws an exception and stops.

In an ANY state node, the virtual machine non-deterministically selects one of the edges, performs the corresponding active sequence and selects the corresponding next state.

In a mixed state node, the virtual machine inspects the input, and if some input is available, it is matched to the input edges of the mixed state. The virtual machine then selects the corresponding edge and performs the active sequence (as in the basic state). If there is no input, the virtual machine selects and performs the active sequence without an input event.

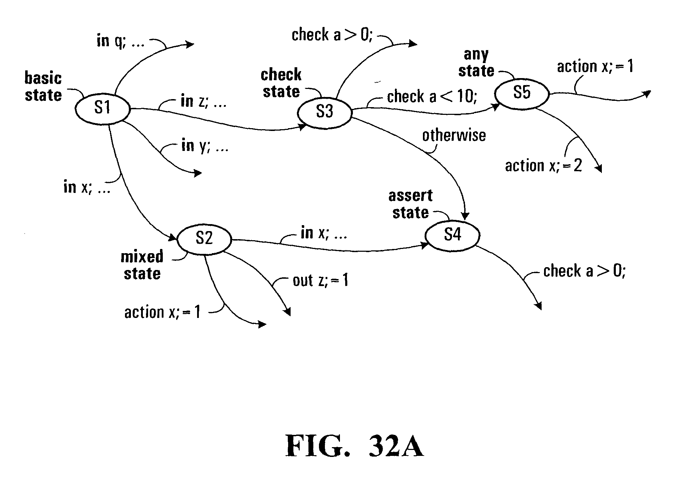

An example of a state-based diagram is shown in Figure 32A, and shows examples of the various nodes.

An example of an embodiment of a method for generating a state-based diagram from an event from diagram for a given actor comprises the following steps:
(1) Select actor
(2) Perform consolidations, if needed (using method 3)
(3) Create roadmap for the (consolidated) interaction-based specification (using method 1, step 1)
(4) Create event flow diagram for the selected actor from the roadmap (using method 1, step 2)
(5) Transform event flow diagram so that implicit decisions on data are represented as explicit operations (using method 2)
(6) Initialize edge table ET to be empty: {}->ET
(7) Create nodes in the state-based diagram. For each node e in the event flow diagram repeat the following step (7.1):
(7.1) Analyze the outgoing edges of the node e:

Following situations arise:
(A) All outgoing edges are marked only by input events:
   (7.1.1) Create a basic state node s with unique name;
   (7.1.2) For each input event i from an outgoing edge to event flow node e' add the following information to the edge table: <e,e',s,i> -> ET
(B) There is a single outgoing edge marked by an active event a to event flow node e':
   (7.1.1) Add the following information to the edge table: <e, e' , { } , a> -> ET
(C) All outgoing edges are marked only with active events:
   (7.1.1) Create an ANY node s with unique name
   (7.1.2) For each active event a from an outgoing edge to event flow node e' add the following information to the edge table: <e,e',s,a> -> ET
(D) There is a single outgoing edge marked with a check event c to event flow node e':
   (7.1.1) Create an assert node s with a unique name
   (7.1.2) Add the following information to the edge table: <e,e',s,c> -> ET
(E) All outgoing edges are marked with checks:
   (7.1.1) Create a check node s with unique name;
   (7.1.2) For each check event c from the outgoing edge to event flow node e' add the following information to the edge table: <e,e',s,c> -> ET
(F) All outgoing edges are marked with input events except for one edge that is marked with an active event:
   (7.1.1) Create a mixed state s with a unique name;
   (7.1.2) For each input event i from the outgoing edge to event flow node e' set the following information to the edge table: <e,e',s,i> -> ET;
   (7.1.3) For the single active event a from the outgoing edge to node e' add the following information to the edge table: <e,e',s,a> -> ET
(G) Outgoing edges are marked with mixed input and (multiple) active events:
   (7.1.1) Create a mixed state s with unique name;
   (7.1.2) Create an ANY node s' with unique name;
   (7.1.3) Create an edge in the state diagram from node s to node s' marked with an empty active sequence;
   (7.1.4) For each input event i from the outgoing edge to event flow node e' set the following information to the edge table: <e,e',s,i> -> ET
   (7.1.5) For each active event a from the outgoing edge to node e' set the following information to the edge table: <e, e' s' , a> -> ET

(8) Create the start node for the state-based diagram in the following way: if there is already a state corresponding to the state node in the event flow diagram (exists item <es,ex,s,z> in ET, where es is the start node in the event flow diagram, ex - a node in event flow diagram, s a state in the state-based diagram, and z - an event), then mark state s as the start state in the state-based diagram; otherwise (exists item <es,ex,{},z> in ET) create start state s for the state based diagram with unique name, and change item <es,ex,{},z> into <es,ex,s,z> in ET).
(9) Create remaining edges in the state-based diagram. For each state s in the state-based diagram repeat the following step (9.1):
   (9.1) For each item <e,e',s,z> in ET repeat:
   (9.1.1A) if exist item <e',x,s',y> in ET, create edge from state s to state s' marked with event z
   (9.1.1B) if exist item <e',x,{},y>
   (9.1.1B.1) start event sequence m={z}
   (9.1.1B.2) while exist item <e',x,{},y> in ET append y to m; until found item <e",a,s',b>
   (9.1.1B.3) create edge from state s to state s' marked with event sequence m

Below steps 6-9 of the above method are illustrated for creating a state-based diagram from the event flow diagram for actor db from Figure 19B.

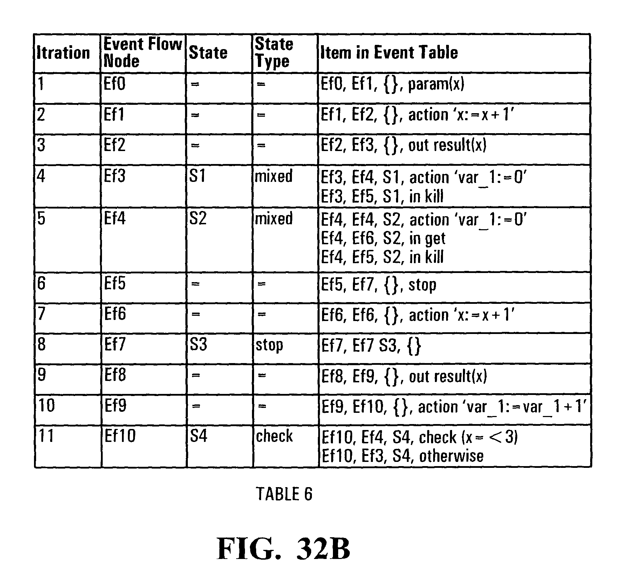

Table 6 of Figure 32B illustrates iterations of step 7.

Step 8 of the above method will lookup ET for items, containing Ef0 (the start node of the event flow graph at Figure 19B) in the first position. This will yield the following item:

<Ef0, Ef1, {},param(x)>, which indicates, that the corresponding state in the state-based diagram was not yet created. According to step 8, a new start state s0 will be created and the item <Ef0,Ef1, {},param(x)> will be changed into <Ef0,Ef1,s0,param(x)>.

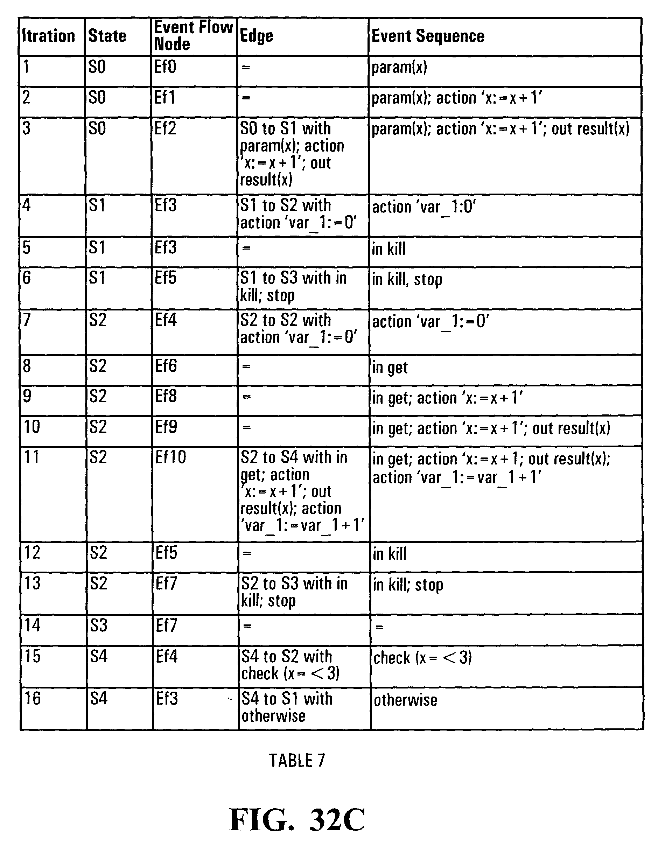

Table 7 of Figure 32C illustrates iterations of step 9 of the above method.

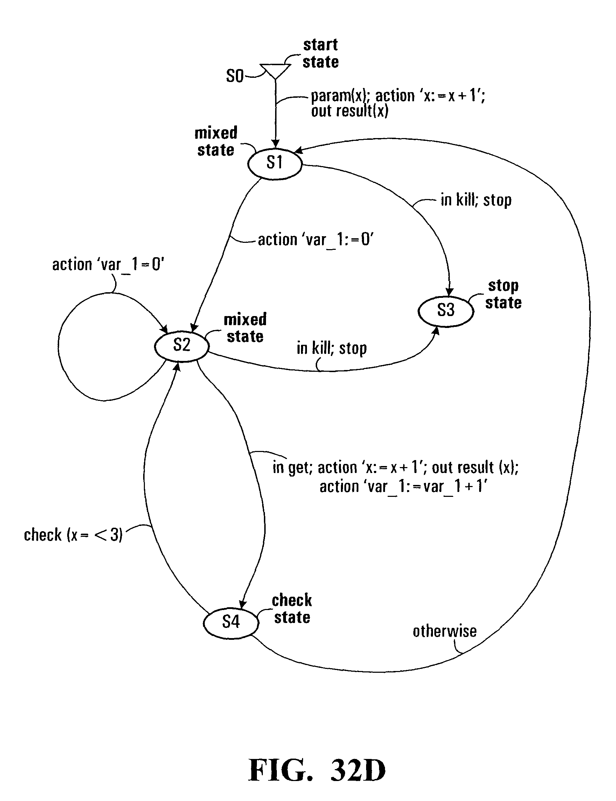

An example of the resulting state-based diagram for Figure 19B is shown in Figure 32D.

### Method 5: Generating a Structure Diagram from an Interaction-based Specification

Another aspect of the present invention provides a method, apparatus and computer program for generating a structure diagram from an interaction-based specification.

A structure diagram comprises nodes, that represent actors, and edges, that represent associations between actors. Edges represent directional communication channels between actors, i.e. when the structure diagram, corresponding to an interaction-based specification, contains an edge between two actors in the direction from the first actor (the sender of an interaction) to the second actor (the receiver of the interaction), this means that in one or more of the interaction diagrams of the interaction-based specification the first actor sends a message to the second actor, and the second actor receives this message. Edges in a structure diagram are additionally marked with the set of all messages, sent by the sender and received by the receiver of the interaction.

Generally, a structure diagram provides information about the addressing of messages between actors, whereas a state-based diagram provides the behaviour or state of individual actors, and not addressing information. For example, a state-based diagram may indicate that an actor sent something, bur not where it was sent. A structure diagram provides this addressing information so that a complete description or model of the system can be generated.

A structure diagram has the following benefits:
(1) A structure diagram allows an interaction-based specification to be validated by observing the total collection of actors, derived from all interaction diagrams in the interaction-based specification, as well as the direction of communication between them and the sets of messages for each communication channel.
(2) A structure diagram can be used to jump-start architecture modelling.
(3) A structure diagram can be used to automatically generate a complete executable prototype in a selected programming language.
(4) A structure diagram can be used to automatically generate deployment configuration descriptions for a selected deployment configuration language.
(5) A the structure diagram can be used to automatically generate build scripts for the software system for a selected build language.

An example of an embodiment of a method for generating a structure diagram from an interaction based specification is described in more detail below.

In one embodiment, the method comprises the following steps:

### Step 1.

For all interaction diagrams
For all actors
Add actor to the set of all actors

### Step 2.

Initialize environment channels
Initialize inter-actor channels
Initialize lost and found channels

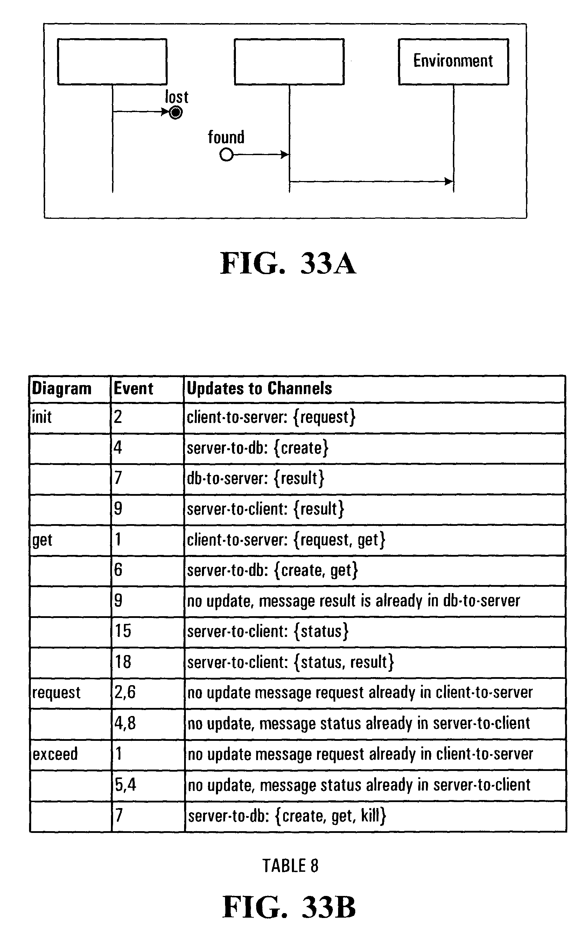

Examples of lost and found channels are shown in Figure 33A. A lost channel is one where an entity sends a message, but the message is not received (by the system), and a found channel is one where a message is received (by the system), but no component of the system sent it.

### Step 3.

For all interaction diagrams
For all interactions (each interaction is counted once, not as two separate events)

The following situations may arise:
(a) Input from environment:
   add message to the environment channel, incoming into the current actor
(b) Output to environment:
   add message to the environment channel outgoing from the current actor
(c) Input from other actor
   add message to inter-actor channel from other actor to the current actor
(d) Output to other actor
   add to inter-actor channel from the current actor to other actor
(e) Input from found with actor information available add to inter-actor channel from other actor to current actor
(f) Input from found without actor information available add to lost and found channel to current actor
(g) Output to lost with actor information available add to inter-actor channel from current actor to other actor
(h) Output to lost without actor information available add to lost and found channel from current actor
(i) Input from self:
   ignore event
(j) Output to self
   ignore event

### Step 4.

Generate block for each actor

### Step 5.

For each channel
If channel is not empty - generate channel

An example of the present method is illustrated using the example of Figure 3 to 7.
Step 1. Compile a set of all actors from all sequence diagrams: {client, server, db}
Step 2. Initialize channels
   Environment channels:
   Env-to-client := {}
   Env-to-server :={}
   Env-to-db := {}
   Db-to-env :={}
   Server-to-env :={}
   Client-to-env :={}
   Intra-actor channels:
   Client-to-server := {}
   Client-to-db := {}
   Server-to-client := {}
   Server-to-db :={}
   Db-to-client :={}
   Db-to-server :={}
   Lost and found channels:
   LF_client := {}
   LF_server :={}
   LF_db := {}
Step 3.

The actions resulting from step 3 are shown in Table 8 of Figure 33B. The table identifies for each interaction diagram, the event and the updates to the channels between the actors concerned.

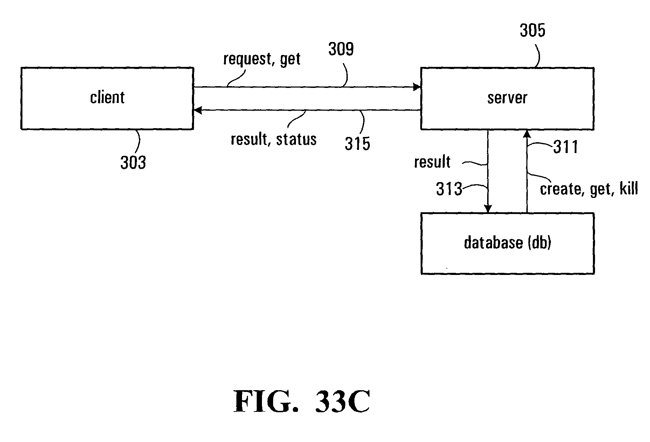

The actions resulting from steps 4 and 5 are shown in Figure 33C.

Referring to Figure 33C, step 4 generates a block 303, 305, 307 for each actor client, server, database, respectively.

In step 5, edges representing directional communication channels between the actors are added between the actor blocks, and are labelled according to the results from step 3. In particular, the communication channel 309 is labelled "request, Get", derived from the various communications from client to server identified in Table 8 which relate to interaction diagrams Init and Get. Similarly, the communication channel 311 from server to database is labelled "create, Get, Kill", again derived from the interactions identified in Table 8. The communication channel 313 from database to server is labelled "result" and the communication channel 315 from server to client is labelled "result, status", again derived from the various interactions between the actors identified in Table 8.

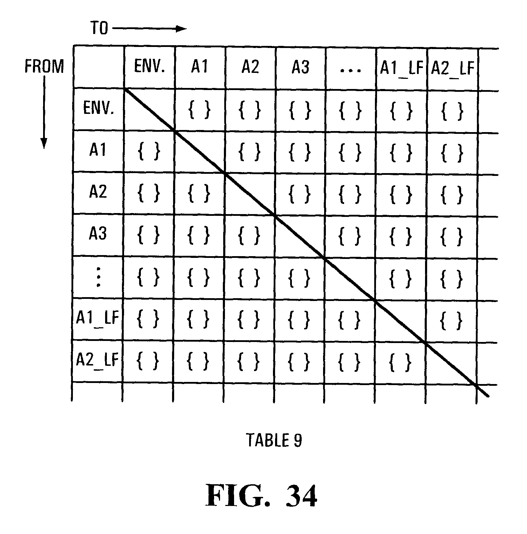

Figure 34 shows a table that may be generated for a structure diagram. The table contains a two dimensional array of sets of communications between the environment and each entity, between each entity, and also the lost and found channels. The sets are also indicative of the direction of the communication channel, with the entities from which a message is sent being listed on one axis (in this case the rows) and the entities to which a message is sent along the other axis (in this case this columns). Other embodiments may include fewer objects in the table, for example, may omit communications from the environment (if none exist for the particular system), and similarly lost and /or found channels may be omitted.

The structure diagram may be provided by other techniques known to those skilled in the art, for example by visual inspection of the system. The method of generating a structure diagram from an interaction based specification enables the structure diagram to be generated automatically, reducing the work needed and the possibility of errors. As the structure diagram in this case is also generated from the same source as the state-based diagram, this helps to ensure consistency between them. It is to be noted that this aspect of the invention is independent of other aspects of the invention.

Embodiments of the invention may further include a method and apparatus for generating an executable model (program) either from the state-based diagram, the structure diagram, or both.

It is to be noted that each apparatus (e.g. section of the synthesiser) and method produces a useful artifact, which may be expressed in a number of ways such as a data structure for use by a further machine implemented process, for instance, or expressed in the form of a diagram, text or other form interpretable by human or machine.

Other embodiments of the present invention comprise any feature disclosed herein in combination with any one or more other features disclosed herein.

Embodiments of the methods disclosed herein may be implemented in any desired way, and may be implemented in software, hardware or a combination of the two.

Further aspects of the invention provide a method for deriving an event flow diagram/specification from an interaction-based specification, comprising the steps of: (1) generating an interaction based specification defining interactions between a plurality of physical entities; (2) selecting an entity from said plurality of physical entities; and (3) generating an event flow diagram/specification for the selected entity comprising a plurality of nodes and an edge between each node, wherein each node represents the start of one or more possible events associated with the selected entity and each edge represents a single event.

A method wherein the step of generating an interaction-based specification comprises generating at least one sequence diagram, for example, a message sequence chart.

A method further comprising dividing a sequence diagram into a plurality of primitive interaction sections.

A method wherein each primitive interaction section is defined as a maximum section of a sequence diagram such that the sequence does not cross frames of inline expressions.

A method further comprising the step of generating a road map from one or more primitive interaction sections, the road map comprising a plurality of nodes and at least one edge between each node, wherein each node represents the start and end point of a primitive interaction section, and each edge represents a complete sequence of events from a primitive interaction section for a given entity.

A method further comprising the step of forming an edge between adjacent nodes for an entity not involved in a primitive interaction section, the edge being representative of an idle event for the or each entity not involved in said primitive interaction section.

A method further comprising the step of generating a high level activity diagram from a plurality of sequence diagrams including possible connections/continuations from one sequence diagram to another sequence diagram.

A method further comprising generating a root road map from said high level activity diagram by inserting a generated road map for at least one or each sequence diagram.

A method further comprising deriving an event flow diagram/specification for a selected entity from said root road map.

A method further comprising deriving an event flow diagram/specification for another entity from said root road map.

A method further comprising deriving an event flow diagram from said root road map for each entity in said road map.

A method further comprising transforming said root road map into an event flow diagram by merging similar events.

A method comprising the step of identifying all nodes in a root road map that are reachable from a start node, optionally storing the set of identified nodes in a node table (NT), and, optionally assigning a node name/label to said set for said event flow diagram/specification.

A method comprising the step of selecting a node in said root road map, selecting an event from said node and identifying one or more follow-up nodes for said selected event.

A method further comprising selecting another event from said node and identifying each follow-up node for said selected event.

A method further comprising the step of generating one or more groups of follow-up nodes each reachable by the same event.

A method further comprising storing each group of follow-up nodes in a node table.

A method further comprising searching said node table for existing nodes with same sets of follow-up nodes for a new node, and if said set of follow-up nodes exists, using the existing event flow node rather than creating a new node.

A method wherein said event flow diagram/specification includes a plurality of event flow nodes, each representative of a group of said road map nodes, each event flow node being connected to at least one other node by an edge representative of a common event which reaches each road map node in said group.

A method further comprising generating traces from said event flow diagram.

A method wherein each trace is representative of a test case for said event flow diagram.

A method of testing a prototype program comprising the steps of generating an event flow diagram from an interaction-based specification, and generating traces from said event flow diagram representative of a test for said prototype program.

A prototype controller (e.g. program) for an element in a system comprising an event flow specification derived from an interaction-based specification, said event flow specification comprising a plurality of event nodes, and an event defining an action for said element linking said event nodes.

An event flow diagram/specification.

An event flow diagram/specification derived using any one or more of the steps disclosed herein.

An apparatus for generating an event flow diagram/specification from an interaction-based specification, said apparatus comprising an input for receiving an interaction-based specification, means for transforming said interaction-based specification into an event flow diagram/specification, and means for outputting said event flow diagram/specification.

An apparatus wherein said transforming means comprises means for transforming said interaction-based specification into an event flow diagram/specification using any one or more transforming method steps disclosed herein.

A computer program derived using any one or more of the method steps disclosed herein.

A computer readable medium for storing a computer program therein derived using any one or more of the steps disclosed herein.

A method of testing a program using traces associated with an event flow diagram.

A state-based diagram/specification derived from an event flow diagram/specification.

A state-based diagram/specification derived using any one or more of the method steps disclosed herein.

A model or computer code derived from a state-based diagram/specification, optionally using any one or more method steps disclosed herein.

A structure diagram/specification derived from an interaction-based specification.

A structure diagram derived from any one or more method steps disclosed herein.

A method for transforming an event flow diagram with implicit decisions on data into an equivalent event flow diagram with explicit operations on data comprising generating a node from a node in said event flow diagram which receives an input and has a plurality of input edges, said new node having a plurality of edges, at least one of which is indicative of one of a check event and an alternative (any-event).

An apparatus for performing any one or more of the method steps disclosed herein.

A computer readable medium containing executable instructions which, when loaded into a computer performs any one or more of the method steps disclosed herein.

A computer program containing code means for performing any one or more of the method steps disclosed herein.

Modifications and changes to the embodiments described above will be apparent to those skilled in the art.

## Claims

1. A method for generating a model of a system, the system comprising a plurality of physical entities capable of performing interactions between each other, the method comprising the steps of:
(a) receiving an interaction-based specification of the system defining interactions between said plurality of physical entities;
(b) dividing said interaction-based specification into a plurality of interaction sections; and
(c) generating a model defining each interaction section and its possible continuing interaction sections.

2. A method as claimed in claim 1, wherein said interaction-based specification comprises a plurality of individual specifications each defining one or more event relating to one or more entities of said system, and wherein each individual specification is related to another individual specification in the interaction-based specification.

3. A method as claimed in claim 2, comprising generating an interaction-based specification from said plurality of individual specifications, and defining the relationship between the individual specifications.

4. A method as claimed in claim 2 or 3, comprising, for each individual specification that comprises one or more interaction section(s), generating an individual said model for each individual specification.

5. A method as claimed in claim any preceding claim, wherein at least one of the interaction-based specification and an individual specification can be represented as a sequence diagram.

6. A method as claimed in any preceding claim, wherein said model comprises a roadmap model comprising means representing an assembly of nodes and edges between adjacent nodes, and each edge corresponds to the event(s) and/or interaction(s) of a respective interaction section and joins a node from which any further interaction sections can continue from that respective interaction section, and originates from a node from which the interaction section is a possible continuation of another interaction section.

7. A method as claimed in claim 6, further comprising generating a separate edge between adjacent nodes for each entity having one or more events and/or interactions in the interaction section which corresponds to said edge.

8. A method as claimed in claim 7, further comprising generating another edge between said nodes for at least one entity having no events and/or interactions in said interaction section.

9. A method as claimed in claim 6 or 7, comprising marking each edge with all events/interactions for each entity in the respective interaction section, and marking the edge for the entity having no events/interactions with an indication that the or each entity is idle for that section.

10. A method as claimed in any preceding claim, wherein each section comprises a primitive interaction section, defined as a maximum section of a sequence diagram that does not cross frames of in-line expressions.

11. A method as claimed in any preceding claim, further comprising the steps of selecting an entity and generating an event flow model defining the flow of events for said entity.

12. A method as claimed in claim 11, comprising generating said event flow model from said model defining interaction sections.

13. A method as claimed in claim 12, wherein generating said model comprises determining each possible follow-up event from a previous event for said selected entity, creating a set of said follow-up events, and if a similar set of follow-up events is identified, merging said set of similar follow-up events in said event flow model.

14. A method as claimed in any one of claims 11 to 13, wherein said roadmap model comprises at least one idle event for said selected entity, and eliminating said at least one idle event when generating said event flow model.

15. A method as claimed in any one of claims 11 to 14, wherein said event flow model comprises means representing nodes and edges between adjacent nodes, and each edge represents a single event for said selected entity in the roadmap model.

16. A method as claimed in any one of claims 11 to 15, wherein said event flow model comprises means representing nodes and edges between adjacent nodes, and one or more nodes each represents a set of one or more nodes from said roadmap model that can be reached from a roadmap node by the same event.

17. A method of generating an event flow model of a system from a roadmap model of a system, wherein the roadmap model of the system comprises a plurality of nodes and at least one edge between each node, wherein an edge corresponds to any of (1) one or more events for a predetermined physical entity of the system and (2) an idle event for at least one physical entity of the system, the method comprising the steps of:
(a) selecting a road map node,
(b) determining the follow-up node(s) from the selected roadmap node,
(c) creating an event flow node corresponding to the determined follow-up node(s), if such event flow node does not exist,
(d) and if an event flow node for said set of nodes exists, connecting a backwards edge from said current event flow node to the existing event flow node for said set.

18. A method as claimed in claim 17, further comprising the steps of:
(e) for each determined follow-up node, determining the follow up node(s) from that node and the event from that node to each follow-up node,
(f) for each follow-up node, check if the set of its follow up nodes have a corresponding event flow node,
(g) if not, create a new event flow node and an edge from the event flow node to the new event flow node, the edge labeled with the determined event,
(h) and, if an event flow node already exists for the set of its follow up nodes, create an edge from the current event flow node to that existing event flow node.

19. A method as claimed in claim 18, further comprising excluding any idle nodes present in the roadmap model from the event flow model.

20. A method as claimed in claim 18 or 19, wherein each edge in the event flow model corresponds to a single event of an edge in the roadmap model.

21. A method as claimed in claim any one of claims 11 to 20, comprising transforming an event flow diagram having a node whose outgoing edge includes a message and parameter, by creating a new node from that node, creating a new variable to receive the parameter, labeling the new edge with a receive said message event and the new variable, and generating a new edge from the new node with a check event to check the value of the parameter.

22. A method as claimed in any one of claims 11 to 21, further comprising generating a state-based model from the event flow model, by analyzing the outgoing edges from nodes in the event flow model and determining each node in the state-based diagram based on the result of the analysis, and creating an edge between the nodes in the state-based model corresponding to those in the event flow model.

23. A method as claimed in any preceding claim comprising generating a structure model of said system.

24. A method as claimed in any preceding claim, wherein said structure model of said system is generated from said interaction-based specification.

25. A method as claimed in claim 24, wherein the interaction-based specification comprises one or more sequence model(s) of the system, and the step of generating comprises identifying interactions between entities in the sequence model and their direction, and generating communication channels between representations of the entites indicating the interactions and direction.

26. A method as claimed in claimed in any preceding claim, further comprising consolidating one or more entities in at least one sequence model of an interaction-based specification into a consolidated entity.

27. A method as claimed in claim 26, wherein consolidating comprises the step of importing actions, for example a data flow, associated with one entity into another entity.

28. A computer program comprising machine readable code which, when implemented in a computer means performs the method of any one of claims 1 to 27, or any subset of steps defined therein.

29. A machine-readable medium storing a data structure resulting from performing the method of any one of claims 1 to 27, or any one or more of the steps defined therein.

30. An apparatus comprising the technical means for performing the method of any one of claims 1 to 27.

31. An apparatus for generating a model of a system, the system comprising a plurality of physical entities capable of performing interactions between each other, the apparatus comprising:
(a) receiving means for receiving an interaction-based specification of the system defining interactions between said plurality of physical entities;
(b) dividing means for dividing said interaction-based specification into a plurality of interaction sections; and
(c) generating means for generating a model defining each interaction section and its possible continuing interaction sections.

32. An apparatus as claimed in claim 31, wherein said interaction-based specification comprises a plurality of individual specifications each defining one or more event relating to one or more entities of said system, and wherein each individual specification is related to another individual specification in the interaction-based specification.

33. An apparatus as claimed in claim 32, comprising generating means for generating an interaction-based specification from said plurality of individual specifications, and defining the relationship/flows between the individual specifications.

34. An apparatus as claimed in claim 32 or 33, wherein said generating means is adapted to, for each individual specification that comprises one or more interaction section(s), generate an individual said model for each individual specification.

35. An apparatus as claimed in claim any one of claims 31 to 34, wherein at least one of the interaction-based specification and an individual specification can be represented as a sequence diagram.

36. An apparatus as claimed in any one of claims 31 to 35, wherein said generating means is adapted to generate said model such that said model comprises means representing an assembly of nodes and edges between adjacent nodes, and each edge corresponds to the event(s) and/or interaction(s) of a respective interaction section and joins a node from which any further interaction sections can continue from that respective interaction section, and originates from a node from which the interaction section is a possible continuation of another interaction section.

37. An apparatus as claimed in claim 36, wherein said generating means is adapted to generate a separate edge between adjacent nodes for each entity having one or more events and/or interactions in the interaction section which corresponds to said edge.

38. An apparatus as claimed in claim 37, wherein said generating means is adapted to generate another edge between said nodes for at least one entity having no events and/or interactions in said interaction section.

39. An apparatus as claimed in claim 36 or 37, wherein said generator means comprises means for marking each edge with all events/interactions for each entity in the respective interaction section, and for marking the edge for the entity having no events/interactions with an indication that the or each entity is idle for that section.

40. An apparatus as claimed in any one of claims 31 to 39, wherein said dividing means is adapted to divide each section into a primitive interaction section, defined as a maximum section of a sequence diagram that does not cross frames of in-line expressions.

41. An apparatus as claimed in any one of claims 31 to 40, further comprising means for generating an event flow model defining the flow of events for said entity from said model defining said interaction sections.

42. An apparatus as claimed in claim 41, further comprising determining means for determining each possible follow-up event from a previous event for said selected entity, means for creating a set of said follow-up events, and if a similar set of follow-up events is identified, means for merging said set of similar follow-up events in said event flow model.

43. An apparatus as claimed in any one of claims 41 or 42, wherein generator means is adapted to generate an event flow model comprising means representing nodes and edges between adjacent nodes, and each edge represents a single event for said selected entity in the roadmap model.

44. An apparatus as claimed in any one of claims 41 to 43, wherein said event flow model comprises means representing nodes and edges between adjacent nodes, and one or more nodes each represents a set of one or more nodes from said roadmap model that can be reached from a roadmap node by the same event.

45. An apparatus for generating an event flow model of a system from a roadmap model of a system, wherein the roadmap model of the system comprises a plurality of nodes and at least one edge between each node, wherein an edge corresponds to any of (1) one or more events for a predetermined physical entity of the system and (2) an idle event for at least one physical entity of the system, the apparatus comprising:
(a) means for selecting a road map node,
(b) determining means for determining the follow-up node(s) from the selected roadmap node,
(c) means for creating an event flow node corresponding to the determined follow-up node(s), if such event flow node does not exist,
(d) and means for connecting a backwards edge from said current event flow node to the existing event flow node for said set, if an event flow node for said set of nodes exists.

46. An apparatus as claimed in claim 44, further comprising:
(e) determining means for determining the follow up node(s) from that node and the event from that node to each follow-up node, for each determined follow-up node,
(f) checking means for checking if the set of its follow up nodes have a corresponding event flow node, for each follow-up node,
(g) means for creating a new event flow node and an edge from the event flow node to the new event flow node, the edge labeled with the determined event, if the check of step (f) is false,
(h) and means for creating an edge from the current event flow node to that existing event flow node, if an event flow node already exists for the set of its follow up nodes.

47. An apparatus as claimed in claim any one of claims 41 to 45, comprising transforming means for transforming an event flow diagram having a node whose outgoing edge includes a message and parameter, by creating a new node from that node, creating a new variable to receive the parameter, labeling the new edge with a receive said message event and the new variable, and generating a new edge from the new node with a check event to check the value of the parameter.

48. An apparatus as claimed in any one of claims 40 to 46, further comprising generating means for generating a state-based model from the event flow model, by analyzing the outgoing edges from nodes in the event flow model and determining each node in the state-based diagram based on the result of the analysis, and creating an edge between the nodes in the state-based model corresponding to those in the event flow model.

49. An apparatus as claimed in any one of claims 30 to 47, further comprising means for generating a structure model of said system from an interaction based specification.

50. An apparatus as claimed in claim 48, wherein the interaction-based specification comprises one or more sequence model(s) of the system, and said generating means comprises means for identifying interactions between entities in the sequence model and their direction, and means for generating communication channels between representations of the entites indicating the interactions and direction.

51. An apparatus as claimed in any one of claims 30 to 49, further comprising means for consolidating one or more entities in at least one sequence model of an interaction-based specification into a consolidated entity.

52. An apparatus as claimed in claim 50, wherein said consolidating means comprises means for importing actions, for example a data flow, associated with one entity into another entity.

53. An apparatus as claimed in any one of claims comprising means for generating an executable model from one or more other models, for example state-based model and/or structure model generated by said apparatus.
